# EUROPEAN PATENT APPLICATION

(11) **EP 4 070 685 A1**
(43) Date of publication of application: **12.10.2022**
(21) Application number: 21305442.2
(22) Date of filing: 07.04.2021
(51) Int. Cl.: A45D 33/00, A45D 40/22

(54) **COMPACT CASE**

(71) Applicant: Cosnova GmbH, 65843 Sulzbach (DE)
(72) Inventor: GEIGER, Axel, 65843 Sulzbach (Taunus) (DE); MATHIEZ, Jean-Louis Marie Marcel, 91470 Limours (FR)
(74) Representative: Ernest Gutmann - Yves Plasseraud S.A.S.

(57) **Abstract**

The case in loaded state (LD) comprises a bottom + cover + hinge component (5) including a bottom (7) with a wall (10), an upper opening (12), a lower opening (13), and a means (15) for fixing an insert (6); a cover (8) including a wall (16) and a peripheral wall (17); a side film hinge (3); the bottom (7), the cover (8) and the hinge (3) being one single component, molded in an intermediate manufacturing conformation fully opened flat at 180°, followed by a relative pivoting closing movement; an insert (6), including walls (32), (34), an opening (36), a means (37) for fixing a bottom, a content holding face (38) which limits a storage space (2); and a content (C) in the storage space (2); the insert (6) being rigidly fixed onto the component (5) with the means for fixing (15, 37), so that the insert (6) extends and fits into the lower transversal bottom opening (13).

## Description

### TECHNICAL FIELD

The invention relates to personal daily use compact plastic cases with a side opening / closing hinge for products forming a solid mass suitable for removal by means of a pick-up utensil or manually, such as cosmetic products, e.g., face powder, makeup, eye shadow, blush, concealer, lip gloss, lipstick, eyeliner, etc. Other applications are possible for products having as regards packaging, removal, and use, similar or equivalent features and requirements. More particularly, the invention relates to mass market trivial cases intended to be discarded after use of the content.

"Case" should be understood as a device for packaging the product and allowing its removal as mentioned, such as a container, which is rigid as a whole and comprises a lower portion and an upper portion that can be closed or opened reciprocally by means of a side opening / closing hinge, and which defines an interior storage space to receive the product.

"Compact" should be understood to qualify a case having a length, a width and a height having an order of magnitude of centimeter (from a little bit less to 1 cm till about 10 cm), or a weight of content product between around 1 g to 15 g. More particularly, the field of the invention relates to flat cases i.e., having a height low compared to length and width e.g., a ratio height / length or width having an order of magnitude of 1/7 to 1/3. "Personal daily use" should be understood to qualify a case intended for use currently by a person for himself or herself, as opposed to a box, enclosure, or the like for big quantities of product or collective or industrial use. "Trivial" should be understood to mean ordinary use in relation to everyday life.

"Plastic" should be understood as synthetic or semi-synthetic materials that usually use a polymer as a main ingredient and that can be processed to obtain solid objects of various shapes as, e.g., by molding. "Side opening / closing hinge" should be understood as a connected means between the lower portion and the upper portion, located on the lateral side of the case, allowing a pivotal movement of the two portions relatively to each other. "Mass" should be understood as a continuous and coherent whole, which constitutes the product. "Solid" should be understood as a consistency from pasty to solid, including semi-solid, compacted powder, powdered mixture, gel... "Pick-up utensil or manually" should be understood as a brush, a puff or equivalent or fingers or palm of the user.

### BACKGROUND

It exists several embodiments of cases for the kind of products mentioned above, which comprise, on one side several components assembled together, and on the other side, a lower portion and an upper portion that can be closed or opened reciprocally by means of a side opening / closing hinge, and which define an interior storage space to receive the content of product. These embodiments can be classified according to different families, each being characterized by its specific kind of use or its specific main features. Non limited examples of families are sampling cases, specially designed refillable cases, non refillable cases, cases for a high number of uses or on the contrary for a rather limited number of uses, cases with, or on the contrary without, integrated removal and/or application utensil, cases for product containing a significant volatile component whose evaporation or leakage must be prevented, or the contrary, sophisticated decorative appearance cases that can be collected and displayed, and mass market trivial cases as defined above.

FR2414311 discloses a flat parallelepiped case, comprising a cover, a body and a middle part formed of two frames connected by a flexible hinge, each of the frames penetrating gently in the cover and in the body respectively, in which there is provided on the rear face of the case one rivet fixed through aligned holes made in the cover and the corresponding frame.

FR2806893 discloses a case comprising a bottom and a cover articulated on the bottom via an intermediate element connected to the bottom by a first film hinge / articulation axis and connected to the cover by a second film hinge / articulation axis, so that to form a parallel-axis dual-articulation structure which is rigid and not deformable between the two-articulation axis, where is located a protrusion. Such structure allows to pivot the cover through 360° relative to the bottom, so as to place the cover below the bottom. In this configuration, the case is packaged in a transparent blister-type or heat-shrinkable film package. Such a case brings a complicated solution to the problem of allowing the user to see the content of the case. In addition, the film hinge is fragile since it is a localized axis hinge with a large amplitude pivoting. This fragility is doubled because there are two film hinges, reason why it is envisaged to have only one film hinge / articulation axis and a second conventional hinge with an attached separate axis, with the drawback to complicate the manufacturing.

FR2814348 discloses a case comprising a cover and a bottom, separate, articulated by an appendix connected to the cover by a hinge film, the appendix being received within a housing of the bottom and maintained fixed by means of asperities and notches. Such a case is complicated to manufacture, and a part of the internal storage used to form the housing of the appendix is loosed.

FR2885498 discloses a flat case for several contents in several different storage spaces in small quantities as samples. The bottom and the cover are connected by a film hinge. The bottom is constituted by a first wall having hollow shapes as storage spaces. The cover forms a second wall, in the continuity of the first one via the film hinge. The walls and the film hinge have a substantially constant thickness between 0,8 mm and 1,6 mm. Such a case is not suitable for a personal daily use mass market trivial cases intended to be discarded after use of the content which is more durable than one-off use such as for testing and sampling. Further, the rear face of the bottom is uneven, comprising domes. Further, with the two walls and the film hinge having the same thickness (between 0,8 mm and 1,6 mm), the walls may be sufficiently rigid, but it is difficult to pivot the hinge. With a much smaller thickness, the drawback would be that the first and second walls would not be rigid enough.

EP3188617 and EP3164031 disclose a refillable structure in which the bottom and the cover are provided respectively with ribs comprising holes, a pin being inserted into the holes. Such a case is complicated and costly with a high material consumption.

US2014261530 discloses a compact case housing a godet for a cosmetic content, having a bottom, a cover, and a side hinge. The bottom has an annular upper surface which includes a part of the hinge and an upper opening, and a lower opening. The godet is mounted within the bottom from below via the lower opening. The top surface of the cosmetic content is recessed from the upper surface of the bottom. The upper opening of the bottom is covered by a removable protective layer that is adhered to the upper surface of the bottom and can be detached. Such a case requires an annular upper surface having a sufficient radial size to permit the location of the related part of the hinge and the fixation of the layer. The useful diametral width - where can be located the cosmetic content - is a part of the total diametral width of the upper surface which is around 75%. The useful height - where can be located the content - is largely less than the height of the bottom. The volume of the content is not maximized compared to the volume of the case, which is not acceptable for a flat case.

WO2017/074046 discloses a non refillable case having a storage space for a cosmetic product and a puff and comprising several assembled components. A bottom has an upper opening and a lower opening. An external cover has an internal mirror. A lateral conventional hinge connects an axial extension of the external cover to the bottom with a separate rotating shaft. A full sealing lower cap is mounted onto the bottom by outside to close its lower opening. An internal cover having a third opening and located between the bottom and the external cover seals the storage space. A virgin seal is associated to the internal cover and prevents evaporation or leakage of the cosmetic product which contains a volatile component. A lid provides a storage for a puff. The cosmetic product, if in a liquid or gel form, is filled and accommodated in a separate sponge, put in place through the lower opening of the bottom thereafter. Such a case is costly and complicated to manufacture, because of the high material consumption and the numerous components to assemble, and the conventional hinge with a rotating shaft. It cannot be qualified to be flat since its thickness is in order of magnitude of 1 compared to an outside diameter having an order of magnitude of 2. The quantity of cosmetic product in the sponge is limited and not maximized since the diameter of the sealing lower cap, allowing the passage of the sponge, is about the half of the outside diameter of the bottom.

WO2017/176042 of the same inventor and same applicant discloses an alternative construction in which the case comprises a mesh ring having a mesh attached and a disk-shaped virgin tape attached to the mesh ring. A circular micro-mesh is attached to cover a ventilation hole formed on the upper surface of the virgin tape so that air flows out and the cosmetic contents do not flow out.

It is known a film hinge which connects the bottom and the cover of a case. The film hinge extends between two free edges. On its width, the hinge is connected to the respective facing sides of the bottom and the cover. Usually, this width is small compared to the dimensions of the case, in particular the size of the walls of the bottom and the cover and the average thickness of the hinge. For example, this width is limited to around not more than 2 times to 4 times the average thickness of the hinge, and even less, the respective facing sides of the bottom and the cover being in an immediate neighborhood. Further, the hinge may have a thickness which is not constant on its width, with typically a smaller thickness in the middle forming the pivot axis (US2016/0007717).

There is a need of a mass market trivial personal daily use compact and flat plastic case intended to be discarded after use of the content, with a side opening / closing hinge for a product forming a solid mass suitable for removal by means of a pick-up utensil or manually, such as cosmetic products or analogous, which not only overcomes the drawbacks of known cases but also - in combination - comprises only two assembled parts, which has an acceptable appearance with limited sink marks, which allows to maximize the volume of the content compared to the volume of the case, which is economical in terms of the amount of material used, which is economical also in terms of its manufacturing, which does not need a protective layer or supplementary internal lid, which meets a high level of environmental requirements relating in particular to the recycling of components, which can be opened thanks to a hinge film with an opening angle till around 145° and no more, with a spring effect, which allows the purchaser or the user to see the color of the content while the case is closed that is without the obligation to package the case within a blister in opened configuration, and which allows a varied and economical exterior decoration.

### SUMMARY

According to a first aspect, it is proposed a component for case, intended to be a part of a case of a content of a product forming a solid mass, such as a cosmetic product suitable for removal by means of a pick-up utensil or manually, such component being in its manufacturing conformation with closed configuration, having a main axis, and comprising :
a. a bottom with a hollow, which includes a lateral peripheral bottom wall having a lower edge, an upper transversal bottom opening, and a lower transversal bottom opening limited by a bottom opening edge;
b. a cover which includes a transversal cover wall and a lateral peripheral cover wall;
c. a side opening / closing hinge, associated between the bottom and the cover;
d. a means to maintain in the closed configuration, which is reversible and associated with the bottom and with the cover;
characterized in that:
e. the bottom comprises a means for fixing an insert;
f. the bottom, the cover and the hinge are one single monobloc plastic component bottom + cover + hinge;
g. the bottom + cover + hinge component is molded in an intermediate manufacturing conformation in which it is fully opened flat at 180°;
h. the hinge is chosen to be a film hinge;
i. the material of the bottom + cover + hinge component is selected as being a plastic material which can be injection molded, and such that, with a thickness such as the thickness of the walls of the bottom or the cover, it forms something sufficiently rigid, and with a thickness such as the thickness of the hinge, it forms something sufficiently deformable;
j. the walls of the bottom and the cover have thicknesses chosen so that the bottom and the cover are sufficiently rigid as a whole, in particular the thicknesses of the wall, the wall and the wall are equal or almost equal while the hinge has a thickness chosen to be deformable and capable of easily pivoting with reference to a pivot axis space.

According to one embodiment, the material of component is a thermoplastic polymer having chains of molecules which can be oriented as desired, in particular polyolefin or a polyolefin composition. According to one embodiment, the material of component is polypropylene or a polypropylene composition.

According to one embodiment, the bottom + cover + hinge component is molded by a bi-injection process or 2K injection molding, with a first material for the bottom and a second material for the cover, in particular one material opaquer and one material more transparent or translucent, in particular one material substantially opaque in order not to allow to see substantially through it, and one material substantially transparent or translucent in order to allow to see through it. According to one embodiment, the first material is the opaquer material, and the second material is the more transparent or translucent material.

According to one embodiment, the bottom includes a bottom top rim, arranged transversely and directed towards the main axis, extending from the upper portion of the peripheral bottom wall with an intermediate set back portion of rim, the bottom top rim having an annular rim transversal upper face suitable to form an entourage, an annular rim lower face, and an internal edge which defines the peripheral edge of the top bottom opening, the bottom top rim providing a space closed from above, the set back portion of rim comprising a transversal portion adjoining the upper portion and an axial portion adjoining the external edge of the rim, the hollow angled formed by the transversal portion and the axial portion producing a first recess, the lower terminal portion of the peripheral cover wall and the first recess having complementary shapes adapted to cooperate in closed configuration of the component. According to one embodiment, the internal edge of the bottom top rim includes a falling portion with a free transversal face.

According to one embodiment, the film hinge is connected to the peripheral bottom wall at its upper portion within an upper second recess directed towards the exterior and upwards formed in the lateral peripheral exterior face of the transversal portion, and the film hinge is connected to the peripheral cover wall within a lower third recess directed toward the exterior and downwards, in such a way that the hinge registers substantially in the envelope formed by the external faces of the peripheral bottom wall and the peripheral cover wall.

According to one embodiment, the hinge is deformable as a whole so that its deformation providing the pivoting movement occurs over an extent in a pivot axis space which is extended in a lateral transverse direction, the hinge extends between two free first edges spaced from each other along the lateral transverse direction and extends between two second edges connected respectively to the bottom and the cover in a transverse radial axis along which the hinge has a width, the connections between the hinge and the bottom and the cover being in one piece continuously, and in which the pivotal movement of the hinge is a greater or lesser variation in the curvature in the extent of the hinge between the two second edges.

According to embodiments :
a. the thickness e of the hinge is comprised between 0,3 mm and 0,8 mm, more particularly between about 0,4 mm and about 0,5 mm; and/or
b. the width of the hinge in a transverse radial axis is around 3 mm; and/or
c. the thicknesses of the peripheral bottom wall, the transversal cover wall and the peripheral cover wall is significantly higher than the thickness e, being comprised between around 1,5.e and 4.e, more particularly between 2,4.e and 3.e. and/or
d. the thicknesses of the peripheral bottom wall, the transversal cover wall and the peripheral cover wall are equal or almost equal to a value t;
e. the thicknesses of the peripheral bottom wall the transversal cover wall and the peripheral cover wall are equal or in order of magnitude of 1,2 mm.

According to a second aspect, it is proposed a case intended to a content of a product forming a solid mass, such as a cosmetic product suitable for removal by means of a pick-up utensil or manually, in disassembled situation and in empty state, comprising :
a. a bottom + cover + hinge component as described above, the hollow of which defining a lateral envelope in which is located a storage space suitable for the content;
b. a separate lower closure insert component, having a main axis, being in one single monobloc plastic component which is integrally molded in a material identical, or almost identical, or equivalent to the material used for the component, and is rigid as a whole, which comprises :
   i. a transversal insert wall having an exterior lower face and a top interior face;
   ii. a lateral peripheral insert wall arrangement in continuity with transversal insert wall, providing a functional internal peripheral face which limits the storage space and a functional external peripheral face which is suitable and destinated to cooperate with the internal face of the peripheral bottom wall;
   iii. walls having thicknesses chosen so that the insert is sufficiently rigid as a whole;
   iv. a top first surrounding having an internal edge defining the outline of a transversal insert opening;
   v. a means for fixing a bottom;
   vi. a content holding face having the function to hold the content, which limits a hollow opened upward by a transversal insert opening, which forms and defines the storage space, comprising a transversal portion being the main central portion of the top interior face and a lateral peripheral portion which is the functional face of the lateral peripheral insert wall arrangement;
   and in which :
   c. the internal face of the peripheral bottom wall and the external face of the lateral peripheral insert wall arrangement have complementary adjusted surfaces that are capable to interlock;
   d. the insert is capable to be rigidly fixed transversely onto the bottom + cover + hinge component with the respective means for fixing located on their adjusted surfaces, so that the insert is capable to extend and fit into the lower transversal bottom opening.

According to one embodiment, the lateral peripheral insert wall arrangement comprises an internal lateral peripheral insert wall having the internal peripheral face and the top first surrounding disposed transverse, and an external peripheral wall having an external peripheral face and a top second surrounding disposed transverse, the walls being concentric around the main axis; and an annular insert space between the walls. According to one embodiment, the case comprises distinct and spaced radial wings located inside the annular space, in one-piece continuity with the transversal insert wall, the internal peripheral wall and the external peripheral wall, each wing being limited on the top by a free upper face connecting the top first surrounding and the top second surrounding. According to one embodiment, the internal peripheral wall, the external peripheral wall and the annular insert space have radial thicknesses which are identical or close and chosen so that the insert is sufficiently rigid as a whole, in particular a thickness which is equal or close to the thicknesses of the walls of the bottom and the cover. According to one embodiment, the internal peripheral wall has an axial height higher than the axial height of the external peripheral wall, the top first surrounding being higher than the top second surrounding.

According to one embodiment, it is provided grooves and protrusions on the internal face of the transversal portion of the holding face. According to one embodiment, it is provided grooves and protrusions on the exterior lower face of the transversal insert wall.

According to a third aspect, it is proposed a case intended to a content of a product forming a solid mass, such as a cosmetic product suitable for removal by means of a pick-up utensil or manually, in assembled situation and in empty state, in its closed configuration, having a main axis, which comprises :
a. a bottom + cover + hinge component as described above, the hollow of which defining a lateral envelope in which is located a storage space suitable for the content;
b. a separate lower closure insert component, having a main axis, being in one single monobloc plastic component which is integrally molded in a material identical, or almost identical, or equivalent to the material used for the component, and is rigid as a whole, which comprises :
   i. a transversal insert wall having an exterior lower face and a top interior face;
   ii. a lateral peripheral insert wall arrangement in continuity with transversal insert wall, providing a functional internal peripheral face which limits the storage space and a functional external peripheral face which is suitable and destinated to cooperate with the internal face of the peripheral bottom wall;
   iii. walls having thicknesses chosen so that the insert is sufficiently rigid as a whole;
   iv. a top first surrounding having an internal edge defining the outline of a transversal insert opening;
   v. a means for fixing a bottom;
   vi. a content holding face having the function to hold the content, which limits a hollow opened upward by a transversal insert opening, which forms and defines the storage space, comprising a transversal portion being the main central portion of the top interior face and a lateral peripheral portion which is the functional face of the lateral peripheral insert wall arrangement;
   and in which :
   c. the internal face of the peripheral bottom wall and the external face of the peripheral insert wall have complementary adjusted surfaces that interlock;
   d. the insert is rigidly fixed transversely onto the bottom + cover + hinge component with the respective means for fixing located on their adjusted surfaces, so that the insert extends and fits into the lower transversal bottom opening;
   e. it includes a lower transverse case support plane.

According to one embodiment, the case consists of two components, i.e., the bottom + cover + hinge component and the closure insert component.

According to a fourth aspect, it is proposed a case in loaded state, loaded with a content of a product forming a solid mass, such as a cosmetic product suitable for removal by means of a pick-up utensil or manually, in its closed configuration, having a main axis, which comprises :
a. a case in assembled situation as described above, except not being in empty state of content;
b. a content, disposed in the storage space of the insert, supported and contained by the content holding face and surrounded by the annular upper face of the bottom top rim;
and in which :
c. either the mass of the content is accommodated directly on the content holding face, or
d. the mass of the content is accommodated within a separate godet and the godet with the content is accommodated on the content holding face, the godet having a transversal godet wall, a lateral peripheral godet wall terminated by a top godet edge and an access top godet opening limited by the top godet edge.

According to one embodiment, the godet is fixed mechanically by clamping between the bottom top rim of the bottom and the insert. According to one embodiment, the top godet edge is in clamping contact with the free transversal face of the axial falling portion of the internal edge of the bottom top rim or in clamping contact with the rim transversal lower face of the bottom top rim. According to one embodiment, the godet is in clamping contact with the top interior face of the transversal insert wall of the insert. According to one embodiment, the godet is not glued for fixing.

According to one embodiment, the godet is the combination of several elementary godets arranged side by side and containing different contents, in particular four elementary godets.

According to one embodiment, it is provided at least one radial protrusion on the internal face of the peripheral bottom wall which can cooperate with at least one notch provided into the transversal insert wall and the external peripheral insert wall, in order to orientate the insert, and so the content, relatively to the bottom, around the main axis.

According to one embodiment, the top first surrounding of the insert is placed within a space closed from above provided by the bottom top rim and is facing the rim transversal lower face, the top second surrounding of the insert is facing the annular transversal lower face of the transversal portion of the set back portion of rim, and the small free upper faces of the wings are located facing the protruding angle formed by the transversal portion and the axial portion of the set back portion of rim. According to one embodiment, the top first surrounding of the insert is located close the rim transversal lower face and spaced to it, without contact, and the top second surrounding of the insert is spaced to the annular transversal lower face, without contact.

According to one embodiment, the transversal insert wall is either full without opening or comprises one small functional hole to inject the content within the storage space or to allow the passage of an ejector tip to eject a godet from the storage space.

According to one embodiment, the means for fixing the insert to the bottom and the means for fixing the bottom to the insert are protrusions and grooves or equivalent which cooperate and are located on the adjusted surfaces of the internal peripheral face of the peripheral bottom wall and the external peripheral face of the external peripheral wall. According to one embodiment, the means for fixing the insert to the bottom and the means for fixing the bottom to the insert are either irremovable, the insert being permanently fixed to the bottom, or removable the case being so refillable.

According to possible embodiments :
a. the lower edge of the peripheral bottom wall and the exterior lower face of the transversal insert wall are either coplanar or almost coplanar, the lower edge projecting slightly below the exterior lower face, and/or
b. the lower transversal bottom opening is limited by the lower edge of the peripheral bottom wall, and/or
c. the lower edge of the peripheral bottom wall defines a lower support plan of the case.

According to one embodiment, as soon as the means to maintain in the closed configuration have been released, the spontaneous and natural opening angle between the bottom and the cover in opened configuration is comprised between around 115° and 145°, in particular between around 125° and 135°, in particular around 130°. According to one embodiment, there is no supplementary specific opening movement end stop of the cover at the opening angle.

According to one embodiment, the free upper surface of the mass of the not yet consumed content is located in the plane of the transversal insert opening or in the close neighboring of such plane. According to one embodiment with the content accommodated directly on the holding face of the insert, the free upper surface of the content is located in the plane of the top first surrounding or a little below this plane. According to one embodiment with the content accommodated indirectly on the holding face of the insert, by means of a godet, the free upper surface of the content is located in the plane of the top godet edge or a little below this plane.

According to one embodiment, in the direction of the main axis, the content has a thickness of up to about 40% of the total height of the bottom, and in radial direction, the content has a diameter d of up to about 75%, more particularly up to around 85%, of the external diameter D of the rim.

According to a fourth aspect, it is proposed a process to manufacture a bottom + cover + hinge component as described above, the component being in its manufacturing conformation with closed configuration, in which:
a. having available a molding apparatus with at least one mold cavity having an inner shape complementary to the shape of the bottom + cover + hinge component in an intermediate manufacturing conformation in which it is fully opened flat at 180°;
b. having available molding material;
c. molding the molding material in the mold cavity to obtain a bottom + cover + hinge component having an intermediate manufacturing conformation in which it is fully opened flat at 180°;
d. pivoting relatively the bottom and the cover from its intermediate manufacturing conformation, relatively to each other, by means, and at the location, of the hinge till the cover cooperates with, and closes, the bottom;
the so manufactured bottom + cover + hinge component being then in its manufacturing conformation with closed configuration.

According to one embodiment, the pivoting step d. is made at a time when the bottom + cover + hinge component in its intermediate manufacturing conformation is still hot as a result of its molding, in particular without noticeable delay after molding. According to one embodiment, the pivoting step d. is made either when the bottom + cover + hinge component in its intermediate manufacturing conformation is still in the mold cavity or after the bottom + cover + hinge component in its intermediate manufacturing conformation has been removed from the mold cavity.

According to one embodiment, the molding step c. is a bi-injection or 2K molding with a first material for the bottom and a second material for the cover.

According to one embodiment, the process is that:
a. having available a manufactured bottom + cover + hinge component as described above in its manufacturing conformation with closed configuration, and having a closure insert, being not assembled;
b. filling the storage space of the insert with the content;
c. introducing the insert containing the content within the lower bottom opening till it is located within the hollow of the bottom and till the means for fixing the insert of the bottom and the means for fixing the bottom of the insert cooperate.

According to several possible embodiments, the step b. of filling the storage space of the insert with the content is chosen among the following:
a. hot pour directly the content into the storage space of the insert, via its insert opening;
b. compress the content into powder state into the storage space of the insert, via its insert opening;
c. inject the content at a fluid state into the storage space of the insert through the small injection hole of the transversal insert wall;
d. compress the content into powder state into a godet and further placed the godet containing the content into the storage space of the insert, via the lower bottom opening.

According to one embodiment, the step c. of introducing the insert containing the content within the lower bottom opening and fixing the insert to the bottom comprises fixing and immobilizing the godet, maintained in position mechanically by clamping between the rim of the bottom and the transversal insert wall of the insert. According to one embodiment, the godet, maintained in position without glue.

According to one embodiment, the process further includes an in-mold decoration on the cover and/or the bottom and/or the insert.

### BRIEF DESCRIPTION OF DRAWINGS

**Fig. 1**

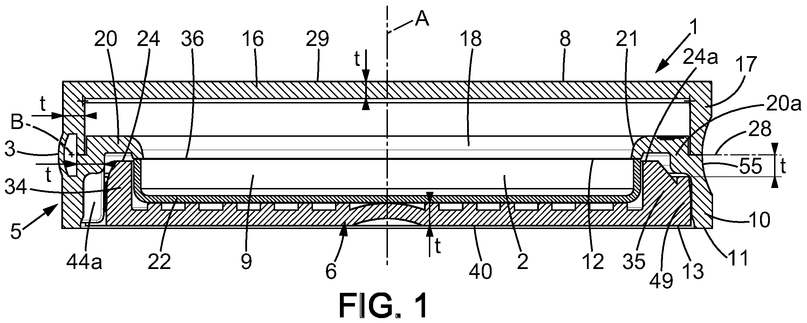

   [Fig. 1] is an axial and diametral cross section view of a case according to the invention, in empty state and closed configuration according to one embodiment in which it is provided an internal godet for the product content (the godet itself being not a part of the empty case), showing more particularly the bottom, the cover and the side / closing film hinge of one first component of the case and one second component of the case being a closure insert which closes the lower opening of the bottom.
Fig. 2

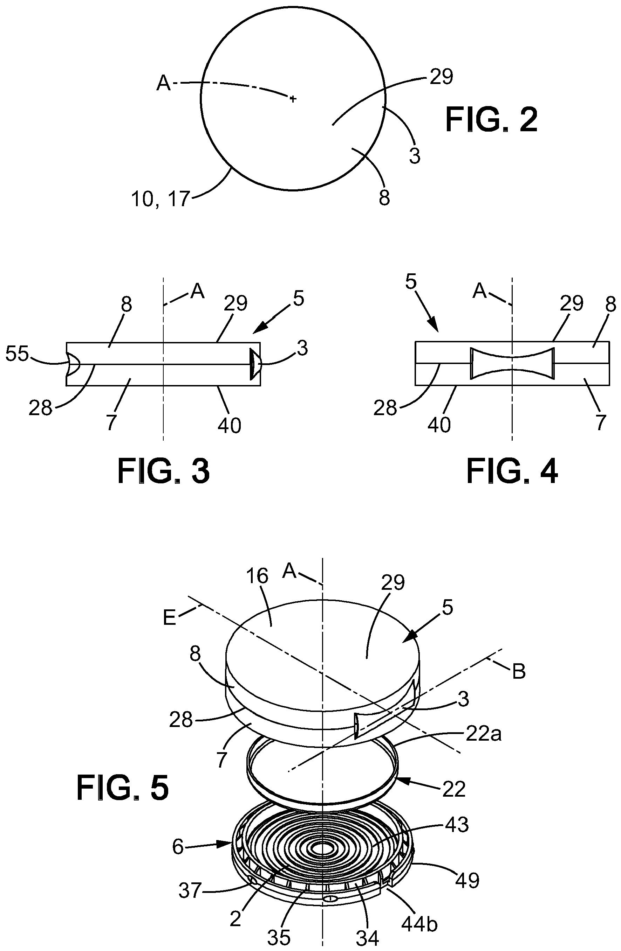

   [Fig 2] is a view from above of a case according to figure 1, in closed configuration, showing a cylindrical shape embodiment.
Fig. 3
   [Fig. 3] is front view of the case of figure 2 showing more particularly its bottom, its cover and its hinge which registers with the lateral exterior face of the bottom and the cover.
**Fig. 4**
   [Fig.4] is a side view of the case of figure 2, showing more particularly its side / closing butterfly film hinge, associated between the bottom and the cover.
**Fig.5**
   [Fig.5] is an exploded view of the case of the embodiment of figure 1 showing more particularly the two components, i.e., the bottom + cover + hinge component and the insert component, which constitute the case and, in this embodiment, the godet for the product content.
**Fig. 6**

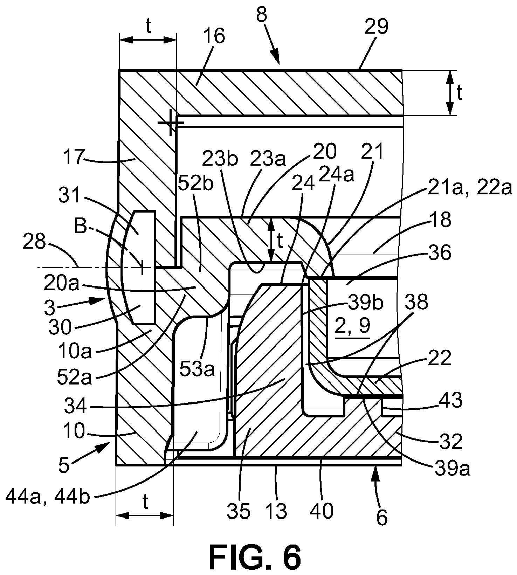

   [Fig.6] is an enlarged partial view of figure 1 from the side of the hinge. This figure shows more particularly the relative arrangement of the material parts of the components of the closure and a godet that makes possible to achieve a case having the desired characteristics, and in particular its compactness, its simplicity, its ecological dimension, and its opening.
**Fig. 7**

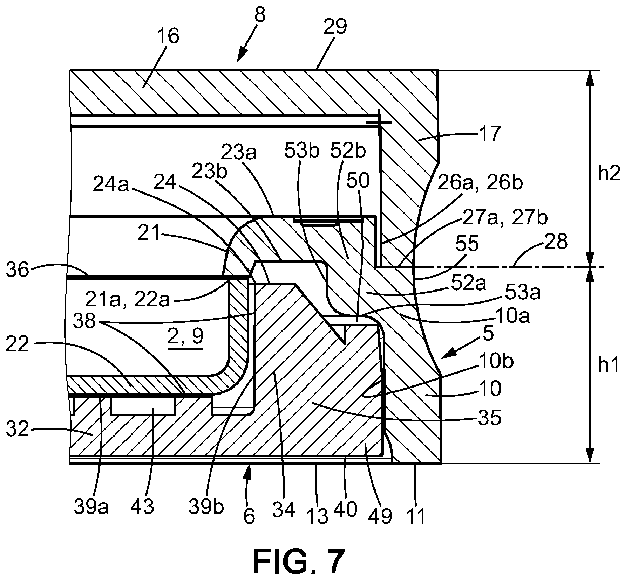

   [Fig.7] is an enlarged partial view of figure 1 from the opposite side of the hinge. This figure shows more particularly the relative arrangement of the material parts of the components of the closure and a godet that makes possible to achieve a case having the desired characteristics, and in particular its compactness, its simplicity, its ecological dimension, and its opening.
**Fig. 8**

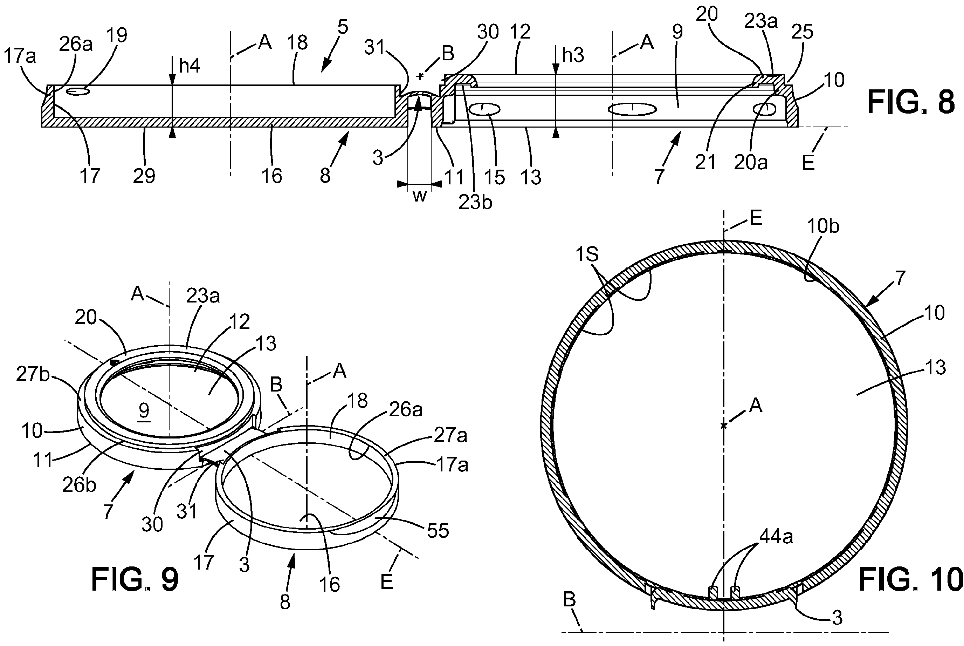

   [Fig.8] is an axial and diametral cross section view of the bottom + cover + hinge component of the case in empty configuration, in its intermediate manufacturing conformation, fully opened flat at 180°, as it is just after molding and before its closing.
**Fig. 9**
   [Fig.9] is a perspective view of the bottom + cover + hinge component of figure 8.
**Fig.10**
   [Fig.10] is a transversal cross section of figure 8 showing more particularly two quasi radial protrusions on the interior face of the peripheral bottom wall in order to orient a godet containing the mass of the content.
**Fig. 11**

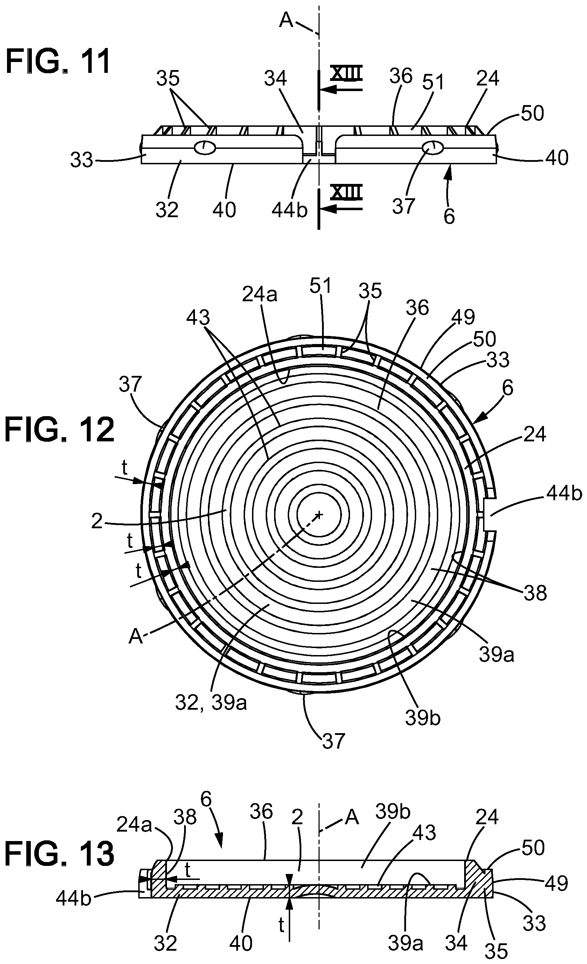

   [Fig 11] is a side view of the insert of the case of figure 1 showing in particular its lateral peripheral wall arrangement, its fixing means to the bottom and an orientation notch for a godet.
**Fig.12**
   [Fig.12] is a view from above of the insert of figure 11 showing more particularly its lateral peripheral wall arrangement, and annular protrusions and grooves of its interior face on the internal transversal insert wall and an orientation notch for a godet.
**Fig. 13**
   [Fig. 13] is a transversal cross section of the insert of figure 11, showing more particularly the storage space of the content.
**Fig. 14**

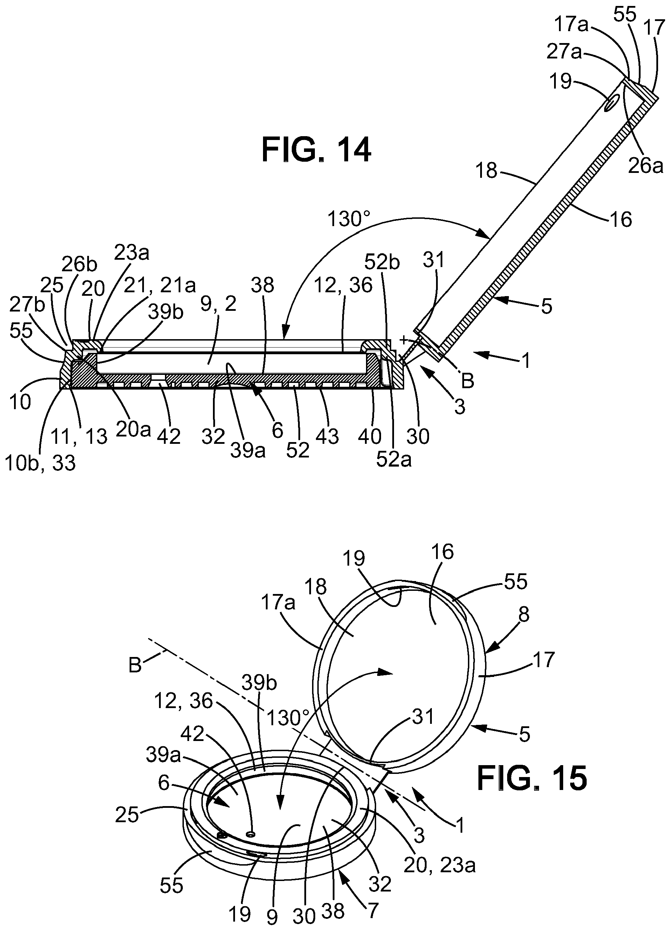

   [Fig.14] is an axial and diametral cross section view of a case, in empty state and opened configuration according to one embodiment in which there is an injection hole in the transversal insert wall, protrusions and grooves on the exterior face of the transversal insert wall. The figure shows the maximum opening angle of the cover relatively to the bottom, around 130°.
**Fig. 15**
   [Fig.15] is a perspective view of the case of figure 14.
**Fig. 16**

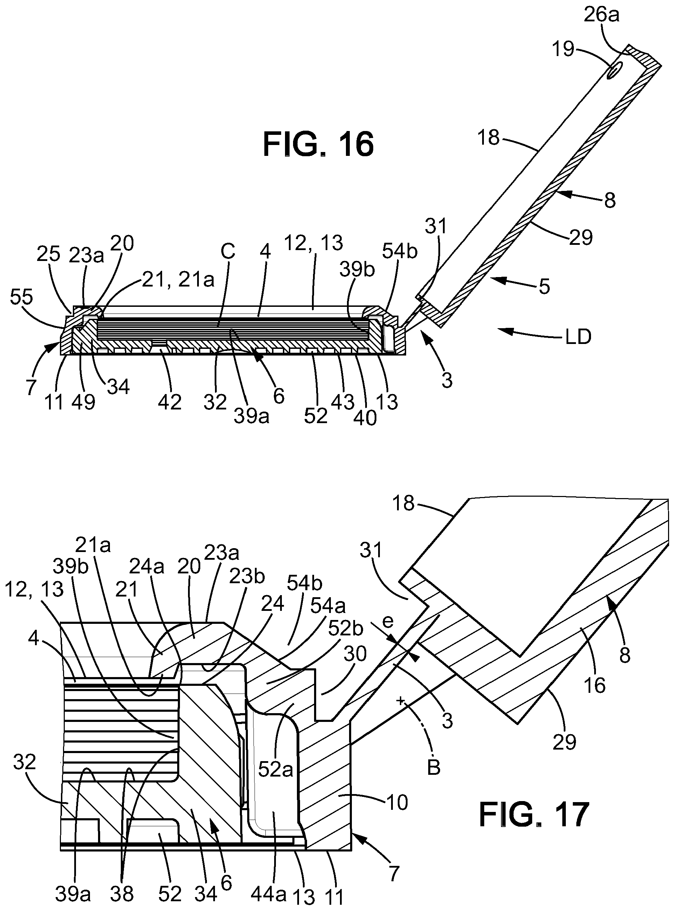

   [Fig. 16] is an axial and diametral cross section view of a loaded case in the loaded state and in open configuration, corresponding to reality, according to one embodiment in which the content is accommodated directly on the holding face of the insert, in its storage space, without any godet. The figure shows the case as well and the content product.
**Fig. 17**
   [Fig.17] is an enlarged partial view of figure 16 from the side of the hinge according to one embodiment in which there is a truncated face inclined so as to leave an empty space facilitating the pivoting movement of the hinge.
**Fig. 18**

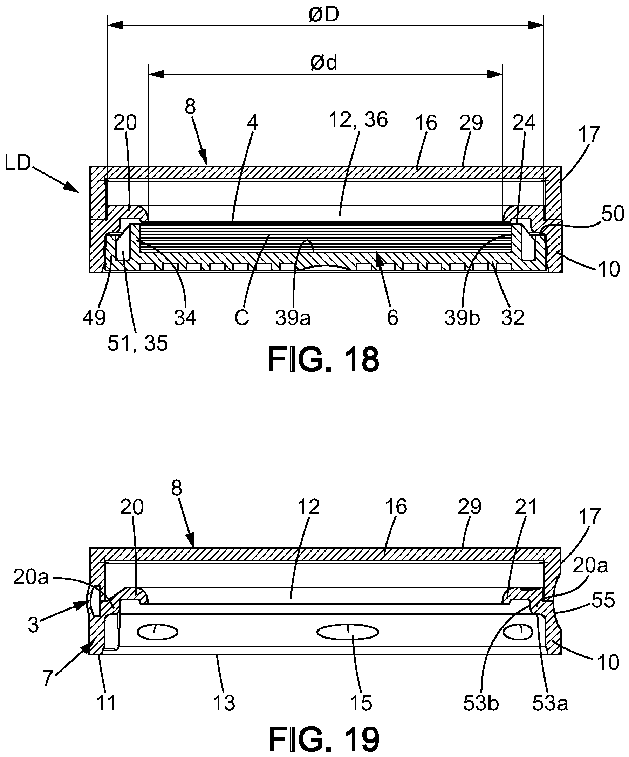

   [Fig.18] is a view analogous to figure 16, but according to a perpendicular cut plane, of the loaded case being in closed configuration.
**Fig. 19**
   [Fig.19] is an axial and diametral cross section view of the bottom + cover + hinge component of the case, in its final manufacturing conformation, after pivoting at 180° the bottom and the cover relatively to each other by means of the hinge, from the intermediate manufacturing conformation of fig.8. The figure shows the component in empty configuration and not yet assembled to the insert.
**Fig. 20**

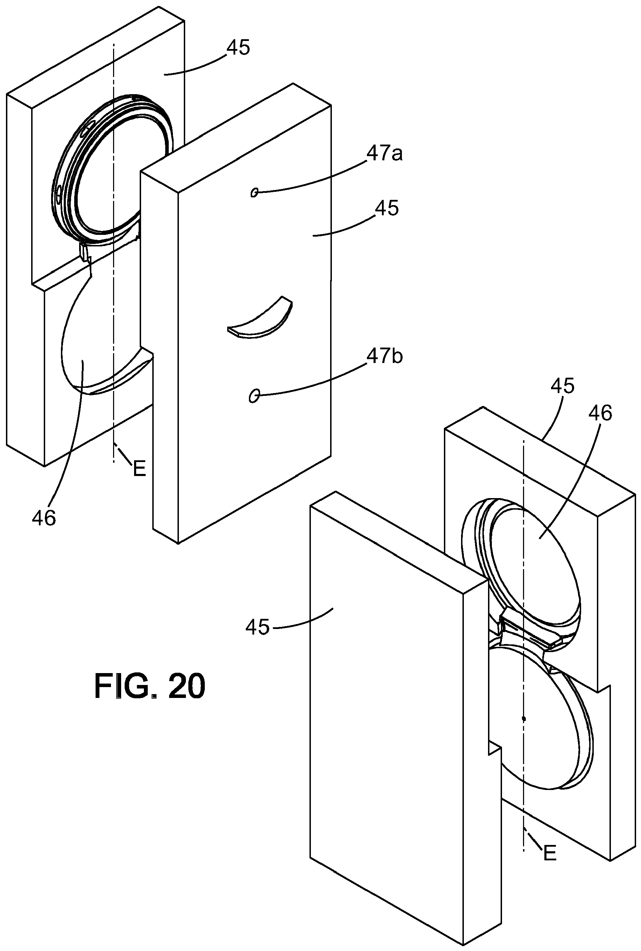

   [Fig.20] shows in a simplified manner, in perspective, according to a front view and a rear view, the two parts (fix part on the injection side and movable part on the ejection side) of a molding apparatus, separated, with a mold cavity, here opened, having an inner shape complementary to the shape of the bottom + cover + hinge component in its flat fully opened configuration represented on fig. 8, corresponding to intermediate manufacturing conformation, the molding apparatus allowing the implementation of a manufacture process of the bottom + cover + hinge component, in case of bi-injection.
**Fig. 21**

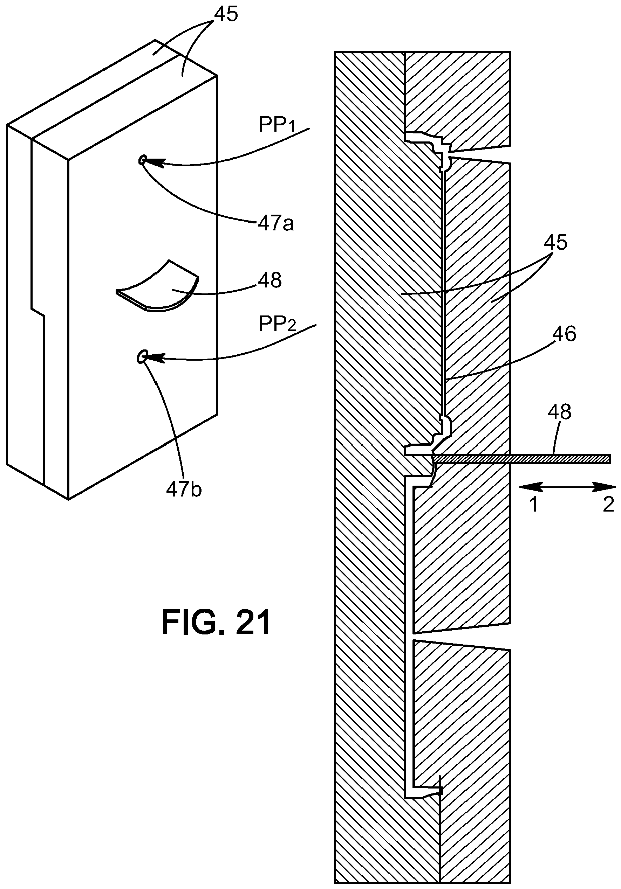

   [Fig.21] shows in a simplified manner, according to a perspective left view and a cross section right view, the parts of the molding apparatus of fig. 20, here closed, showing more particularly two injections holes and a movable bridge or dam allowing a bi-injection process (or so-called 2K injection molding) of the bottom + cover + hinge component.
**Fig. 22**

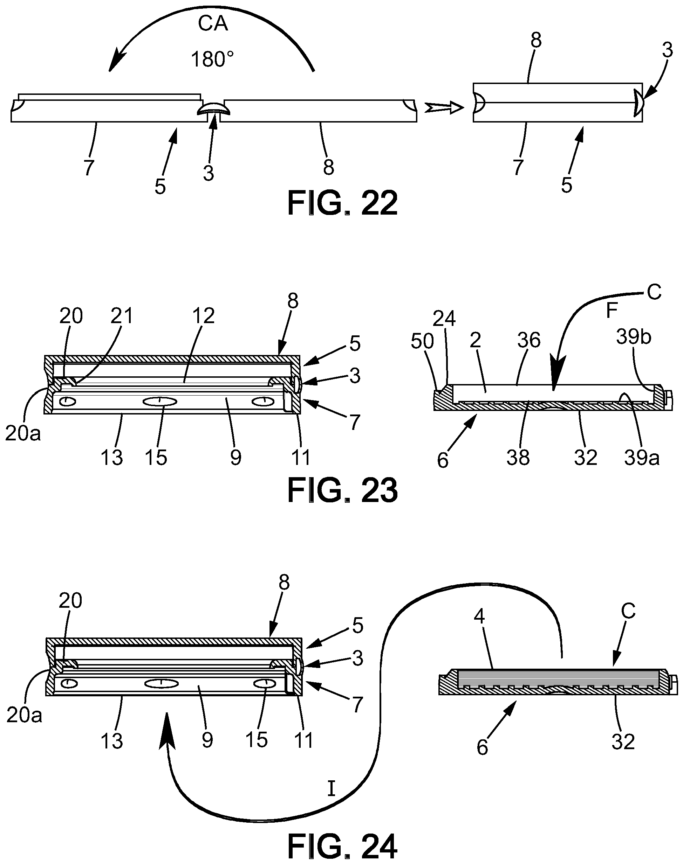

   [Fig.22] shows in a symbolic manner, according to two side views, the bottom + cover + hinge component in its flat fully opened configuration corresponding to intermediate manufacturing conformation (left) and in its closed configuration corresponding to final manufacturing conformation (right), the pivot at 180° of the bottom and the cover, relatively to each other by means of the hinge.
**Fig. 23**
   [Fig.23] shows in a symbolic manner, according to a side view, the fill of the insert with the content product, the insert component, and the bottom + cover + hinge component being not yet assembled.
**Fig. 24**
   [Fig.24] shows in a symbolic manner, according to a side view, the introduction of the insert with the content located in its storage space, within the lower bottom opening of the bottom of the bottom + cover + hinge component in its manufacturing configuration.

### DESCRIPTION OF EMBODIMENTS

This description of several embodiments of the invention is made with reference to the drawings of the figures. It is specified that the drawings are not all to the same scale for reasons of readability. The words used must be construed and understood in the light of the field of the invention and the background, as presented above. Generally speaking, the embodiments are non-limitative.

The case of the invention is a mass market trivial personal daily use compact plastic case intended to be discarded after use of the content, with a side opening / closing hinge for a product forming a solid mass suitable for removal by means of a pick-up utensil or manually, such as cosmetic product, e.g., face powder, makeup, eye shadow, blush, concealer, lip gloss, lipstick, eyeliner. The case is destinated for a rather limited number of uses (but quite more than for a simple sampling or testing). The case is not specially designed to be refillable, but it can be according to one embodiment. The product does not contain any significant volatile component whose evaporation or leakage it would be essential that the case prevents, and so, the case is not specially designed to comprise specific sealing means for this purpose. Other applications are possible for pharmaceutical products, skincare products, coating products, treatment products, decorative products, and more generally products having as regards packaging, removal, and use, similar or equivalent features and requirements.

The case may be without product within (empty state), that is an empty case 1 or, by ellipse, case 1 (fig. 14, 15) or in loaded state with product within (fig. 16, 17, 18), that is a loaded case LD. The case 1 comprises an interior storage space 2 in which is disposed - in the loaded state - a mass of the product, called content C of product (or by ellipse content C). The loaded case LD is the assembly comprising the case 1 and the content C. The case 1 comprises a side opening / closing hinge 3 or, by ellipse, hinge 3, for the relative pivotal movement of its components. The case 1, LC, may be in a closed configuration in which the content storage space 2 is closed (fig. 1 to 4), or in an opened configuration of use, in which access to the storage space 2 and to the content C is possible (fig. 14 to 16). The closed configuration, without any access to the storage space 2, is that where the case LD is presented to sale, sold (possibly with protective, commercial, or informational support), owned by the user, stored when not in use. The opened configuration of use is that of normal use where the user can remove a quantity of the product from the free upper surface 4 of the content C. The case 1 may be in assembled situation, in which its components are assembled together (fig. 1, 14, 15), and in unassembled situation, in which such components are not yet assembled together (fig. 5, 23). With the method of manufacturing such a component of the case 1, the latter is produced in a so-called manufacturing conformation (possibly with an intermediate manufacturing conformation). The case 1, LD, comprises a lower transverse case support plane allowing to be at rest on a shelf or work top.

According to the embodiments, the case 1 is generally cylindrical, typically with a circular or almost circular guideline (as depicted on the figures), or polyhedral, typically right parallelepiped or with a curved outline or truncated angles. The case 1, LD, in closed configuration, mainly extends in length and width in directions transverse to a median mainaxis A. It extends in height in the direction of the main axis A. Typically, the main axis A is vertical when the case 1, LD is at rest on a shelf or work top. "Axial" refers to that is disposed on, or parallel to, the main axis A and "transverse" refers to that is disposed perpendicular or orthogonally to the main axis A. "Radial" refers to that which extends in transverse direction passing through the main axis A. "Perimeter" refers to what goes around the main axis A. "Internal" and "external" qualify respectively and relatively to what is closest or facing the main axis A, and what is farthest from or facing away from the main axis A. "Exterior" qualifies, what is totally or at least substantially or normally outside or visible or touchable in the closed configuration. "Interior" qualifies the contrary of exterior. "Lateral" qualifies what is on the side of the main axis A. It is with the reference of the main axis A being vertical that should be understood the words "low", "up", "top", "below", and other words qualifying a direction, an orientation, or a relative position. The arrangement of the hinge 3 is specially designed to provide a pivot axis space which extends in a lateral transverse direction B (fig. 5, 6). The case 1, LD, may be oriented differently than it is with its main axis A vertical and consequently the words "low", "up", "top", "below», and other words qualifying a direction, an orientation, or a relative position are not limiting the scope of the invention. The case 1, LD is compact and flat, i.e., in closed configuration, its overall length, its overall width, and its overall height have an order of magnitude of centimeter (or a weight of content product between around 1 g to 15 g) while the ratio overall height / overall length or overall width is comprised between 1/7 to 1/3. As a purely illustrative and non-limiting example, the case 1, LD may have an overall diameter of around 4,6 cm and an overall height of around 1 cm.

The case LD in loaded state (fig. 18 in closed configuration and fig. 16, 17 in opened configuration) comprises the case 1 and the content C. The case 1 comprises, more particularly consists of, two separate components 5 and 6, with the advantage of the minimum number of components. The component 5 comprises - more particularly according to one embodiment consists of the combination of a bottom 7 - a cover 8 and the hinge 3 (reason for which the component 5 is named either a bottom plus cover plus hinge component or by ellipse a bottom + cover + hinge component). The component 6 is a closure insert (or by ellipse insert 6). Like the case 1, each component 5, 6, has its own main axis A.

We refer to fig. 8 which represents the bottom + cover + hinge component 5 in its intermediate manufacturing conformation in which it is fully opened flat at 180°. The component 5 is one single monobloc plastic component integrally molded in the fully opened flat configuration extending along a transverse radial axis E, in which the bottom 7 and the cover 8 extend next to each other, separated by the hinge 3. The manufacture of the component 5 in its intermediate manufacturing conformation, is followed by a relative pivoting closing movement of the bottom 7 and the cover 8 (arrow CA of fig. 22) to bring the component 5 into the closed configuration (fig. 19).

The material of the component 5 is selected on one hand as being a suitable plastic material for the manufacture, use, and other requirements here required for component 5, which can be injection molded, to be chemically compatible with the product of the content, be recyclable, be hard enough to withstand touch, impact, and wear. The material of the component 5 is selected on the other hand so that, with a thickness such as the thickness of the walls of the bottom 7 or the cover 8, it forms something which is sufficiently rigid as a whole, and with a thickness such as the thickness of the hinge 3, it forms something which is sufficiently deformable as a whole. The term "sufficiently rigid" should be understood to mean to be able to withstand mechanical pressure or deformation stresses such as those that a user could apply during routine use. The term "sufficiently deformable", should be understood to mean to be able to be deformed so as to ensure a pivoting function when subjected to forces such as those that a user could apply during normal daily use. The term "something" should be understood to mean a physical body, having a certain thickness, made up of the selected plastic material. The walls 10, 16 and 17 of the bottom 7 and the cover 8 made with the material so described have thicknesses chosen so that the bottom 7 and the cover 8 are sufficiently rigid as a whole, while the hinge 3 has a thickness chosen to be sufficiently deformable as a whole, and capable of easily pivoting with reference to the pivot axis space. By "bottom 7 and cover 8 sufficiently rigid as a whole", it should be understood that the bottom 7 and the cover 8 resist mechanical stresses of pressure or deformation such as those which a user could apply to them during a normal routine use such as handling. By "hinge 3 sufficiently deformable as a whole", it should be understood that the hinge 3 is deformable in such a way that it fully fulfills its function of pivot when it is subjected to forces such as those that a user could apply to it during normal daily use such as opening or closing cover 8 from the bottom 7. Typically, the material of component 5 is a thermoplastic polymer having chains of molecules which can be oriented, as necessary. According to one embodiment, the material of component 5 is polyolefin or a polyolefin composition. In a particular embodiment, the material of component 5 is a polypropylene composition. In a particular embodiment, the material of component 5 is polypropylene. The material of component 5 can also be an equivalent, providing in the application considered for the production of component 5, analogous results, in that the bottom 7 and the cover 8 are sufficiently rigid as a whole and that the hinge 3 is sufficiently deformable as a whole.

The bottom 7 has an annular shape and forms a hollow 9 with two openings 12, 13, on either side in the direction of the main axis A. The bottom 7 comprises a lateral peripheral bottom wall 10 having an upper portion 10a, an internal peripheral face 10b, and a lower edge 11. The bottom 7 comprises the top transversal bottom opening 12. The lower transversal bottom opening 13 is limited by a lower bottom opening edge which is the lower edge 11. The bottom 7 has no lower transversal wall in the sense that the lower bottom opening 13 is so as large as possible, since it extends to the internal peripheral face 10b. The lower edge 11 defines the lower support plan of the case 1, LC. The bottom 7 also comprises a means for fixing 15 the insert 6. The hollow 9 defines a lateral envelope in which is located the interior storage space 2. So, the function of the hollow 9 is to house the content C. The function of the top transversal bottom opening 12 is to allow access to the free upper surface of the content C and - according one possible embodiment, to allow the filling with the content C -. The function of the lower bottom opening 13 is to allow the introduction and association of the insert 6 into and with the bottom 7 and - according one other possible embodiment, to allow the filling with the content C -. The cover 8 comprises a transversal cover wall 16 and below a lateral peripheral cover wall 17 limiting a lower transversal cover opening 18. The hinge 3, associated integral between the bottom 7 and the cover 8, is chosen to be a film hinge, in particular a butterfly film hinge. According to different embodiments, the transversal cover wall 16 may be planar or may not be planar, for example more or less convex, protruding or recessed, or with other shapes.

The component 5 also comprises, integrally molded, a means to maintain 19. The means to maintain 19 maintains the bottom 7 and the cover 8 in the closed configuration in the absence of an appropriate opening bias. The means to maintain 19 is reversible and associated with the bottom 7 and the cover 8.

As represented on fig. 20, 21, according to one embodiment, the bottom + cover + hinge component 5 is bi-injected molded with a first material PP1 for the bottom 7 and a second material PP2 for the cover 8. According to one embodiment, the hinge 3 is injected molded with the second material PP2, as is injected molded the cover 8. According to one embodiment, the first material PP1 is opaque (or sufficiently opaque) and hides the technical means of the insert 6. And the second material PP2 is transparent or translucent (or sufficiently transparent or translucent), having a certain transparency or translucency allowing to see the free upper surface of the content C, in particular its color, through the cover 8 in closed configuration. However, other configurations are possible.

We refer to fig. 1, 6, to 10 concerning the bottom 7. The bottom 7 comprises at its top end a bottom top rim 20 (or by ellipse top rim or rim), arranged transversely and directed towards the main axis A, extending from the upper portion 10a of the peripheral bottom wall 10, with an intermediate recessed set back portion of rim 20a. The set back portion of rim 20a comprises two adjacent wedge-shaped portions, namely a transversal portion 52a which is disposed transversely adjoining the upper portion 10a of the peripheral bottom wall 10 and an axial portion 52b which is disposed axially adjoining the external edge of the rim 20. The transversal portion 52a has an annular transversal lower face 53a and the axial portion 52b has a peripheral internal axial face 53b. The protruding angle formed by the transversal portion 52a and the axial portion 52b is directed towards the main axis A. The rim 20 itself has an annular rim transversal upper face 23a and an annular essentially rim transversal lower face 23b. The annular upper face 23a is suitable, for the loaded case LD, to form an entourage surrounding the content C. When the loaded case LD is in the opened configuration, the annular upper face 23a is visible. According to an embodiment shown on fig. 16 to 19, it is provided, at the location of the hinge 3, that there may not be the upper side of the axial part 52b of the recessed part of the rim 20a and the outer side of the rim 20, these parts being limited by a truncated face 54a inclined on the main axis A, from the externa side to the internal side, and from bottom to top, so as to leave an empty space 54b facilitating the pivoting movement of the hinge 3.

The rim 20 has an annular outline, with an external diameter which is D (fig. 18) The rim 20 has a limited annular radial dimension, in particular a radial dimension sufficient, or more particularly just sufficient, to allow the internal peripheral wall 34 of the insert 6 to be located below in plumb line. Opposite to the wall 10, the rim 20 has an internal edge 21 which defines the peripheral edge of the top bottom opening 12, the diameter of which is d (fig. 18). According to one possible embodiment the internal edge 21 has a rounded shape (fig. 6). According to a first possible embodiment (fig. 6), the internal edge 21 includes a short axial falling portion directed towards the lower bottom opening 13 with a free transversal face 21a. With this first embodiment, it is possible, according to one particular embodiment, that the external peripheral lateral face of the falling portion has a position that is slightly inclined on the main axis A upwards and the external side. With this arrangement, the external peripheral face of the falling portion of the rim 20, and so the rim 20 itself, may fulfill a centering function of the insert 6 relatively to the main axis A, because the external peripheral face of the falling portion of the rim 20 may guide properly the top internal edge 24a of the insert 6 during its installation by pressing upwardly into the bottom 7. According to a second possible embodiment, the internal edge 21 has no such above described falling portion. According to the first embodiment above described the distance in the direction of the main axis A between the two planes of the rim transversal lower face 23b and of the free transversal face 21a is small, such as less around 1 mm, e.g., around 0.5 mm. According to the second embodiment above described the rim transversal lower face 23b and of the free transversal face 21a are in the same plane. The rim 20 fulfills at least the function of providing a space which is closed from above and in which the upper part of the insert 6 (that is the part of the internal peripheral wall 34 adjacent to a top first surrounding 24) can be placed, and further to conceal such upper part of the insert 6 from view, in the embodiment in which the rim 20 is opaque or sufficiently opaque.

The top first surrounding 24 of the insert 6 is facing the rim transversal lower face 23b. According to another first possible embodiment (fig. 6), a top first surrounding 24 of the insert 6 is not in contact with the rim transversal lower face 23b but located close. It cannot be excluded in another second possible embodiment, that the top first surrounding 24 is in contact with the rim transversal lower face 23b. According to one embodiment where the content C is disposed within a godet 22 having a top godet edge 22a, the rim 20 - that is to say the free transversal face 21a if there is one, or the rim transversal lower face 23b if there is no transversal free transversal face such as the face 21a - insofar as it is in contact with the top edge 22a of the godet 22, fulfills the function of establishing continuity between the bottom 7 and the godet 22, and also optionally of maintaining the godet 22 in position mechanically, by clamping the godet 22 between the rim 20 of the bottom 7 and the insert 6 (fig. 1, 6, 7), the godet being in clamping contact with, and between, the rim 20 and the insert 6.

We refer to the cooperation of the bottom 7 and the cover 8 in closed configuration (fig. 1, 6, 7, 18, 19). It is provided complementary shapes for the lower terminal portion 17a of the peripheral cover wall 17 and for a first recess 25 located at the upper portion 10a of the peripheral bottom wall 10 and directed towards the exterior and upwards. The first recess 25 of the bottom 7 is produced by means of the hollow angled external configuration formed by the transversal portion 52a and the axial portion 52b of the set back portion of rim 20a. The shapes of the lower terminal portion 17and the first recess 25 are adapted to cooperate in closed configuration. The internal peripheral face 26a of the lower terminal portion 17a and the lateral peripheral face 26b of the first recess 25 (that is the external lateral peripheral face of the axial portion 52b) have adjusted and fitted surfaces. Such adjusted and fitted surfaces are sufficiently continuous and extended so that together in the closed configuration, they form an appropriate barrier preventing dust from entering the case LD. The transversal free face 27a of the lower terminal portion 17a and the transversal free face 27b of the first recess 25 (that is the upper face of the transversal portion 52a) are adjusted to form, on one hand, a blocking at the end of the pivoting closing movement to the closed configuration and, on the other hand, the joint plane 28 of the case 1, LC. The means to maintain 19 comprises complementary protrusions and grooves on the lateral peripheral face 26b and the exterior face 26b, at the opposite of the hinge 3 (fig. 14) where the peripheral bottom wall 10 and the peripheral cover wall 17 may have a slight rounded indentation 55 at the location of the greatest distance between the bottom 7 and the cover 8 when opening the case and, where appropriate, the location of the entry of opening.

According to a possible but in no way limiting embodiment, as illustrated in fig. 6, the distance h1 between the transversal free face 27b and the lower edge 11 and the distance h2 between the transversal free face 27a and the exterior face 29 of the transversal cover wall 16, are equal at ± 10%, in particular ± 5%. With this embodiment, the joint plane 28 of the case 1, LC is substantially halfway up the case 1, LC. The overall height of the bottom 7, h3, is around 20% to 30% more than the overall height, h4, of the cover 8. According to this possible but not limiting embodiment, in its intermediate manufacturing conformation, the bottom + cover + hinge component 5 has the lower edge 11 of the bottom 7 and the exterior face 29 of the transversal cover wall 16 which are more or less coplanar. According to another embodiment in which the internal axial height of the cover 8 is less, the lower edge 11 of the bottom 7 and the exterior face 29 of the transversal cover wall 16 shall be offset in the direction of the main axis A.

Consider now the hinge 3 with explicit reference to the drawings of fig. 1 to 6, 8, 9, 14 to 19. The hinge 3 is not of a conception in which there is only one single pivot axis element between two rigid elements so that the movement of the hinge providing the pivoting occurs locally precisely at the location of this one single pivot axis, while the rigid elements are not deformed. On the contrary, according to the invention, the hinge 3 is deformable as a whole, being arranged so that its deformation ensuring the pivoting movement occurs either continuously or discontinuously - by means of at least two pivot zones - over an extent in a pivot axis space which is extended in the lateral transverse direction B. That is how must be construe "pivot axis space". The hinge 3 extends between two free first edges spaced from each other along the lateral transverse direction B. In its intermediate manufacturing conformation (fig. 8, 9), the hinge 3 extends in the transverse radial axis E between two second edges connected respectively to the bottom 7 and the cover 8, the connections being in one piece continuously. With a case 1 having a circular outline, the hinge 3 in flat situation (opened) has a front elevation outline in the shape of a diabolo (or butterfly), with a smallest width W, at the middle, along the transverse radial axis E, between its two curved second edges and with a greatest width at its two free first edges. The width W is wide enough to allow the pivotal movement of the hinge 3, with reference to the pivot axis space, which should be understood as being a greater or lesser variation in the curvature of the hinge 3, in its extent between the bottom 7 and the cover 8 corresponding to the pivot axis space. In the embodiment depicted on the drawings, the width W is around 3 mm, that is around an order of magnitude of more or less 10 times the thickness of the hinge 3. The opposite exterior faces respectively of the bottom 7 and of the cover 8 are spaced accordingly the width W. The hinge 3 is connected firstly to the peripheral bottom wall 10, at its upper portion 10a, within an upper second recess 30 directed towards the exterior and upwards and secondly to the peripheral cover wall 17 within a lower third recess 31 directed towards the exterior and downwards. In the closed configuration (fig. 1 to 4, 6, 18, 19), the hinge 3 registers substantially in the envelope formed by the exterior faces of the peripheral bottom wall 10 and the peripheral cover wall 17. The upper second recess 30 is formed in the lateral peripheral exterior face of the transversal portion 52a of the set back portion of rim 20a. The thickness e of the hinge is substantially constant over its entire extent along the transverse radial axis E (width W), including at its two second edges connected to the bottom 7 and to the cover 8, and without median line or zone of reduced thickness. If necessary, the thickness of the hinge may vary slightly along the lateral transverse direction B, between its two free first edges. In all cases, the thickness e of the hinge 3 (fig. 17) is chosen so that the hinge 3 is sufficiently deformable and this depending the selection of material of the component 5. The thickness e of the hinge 3 is comprised between 0,3 mm and 0,8 mm, more particularly between about 0,4 mm and about 0,5 mm.

The thicknesses of the peripheral wall 10 of the bottom 7 and the transversal cover wall 16 and the peripheral wall 17 of the cover 8 can be equal or almost equal to a value t (fig.7). The thickness t of the walls, 10, 16, 17 is chosen so that the walls 10, 16, 17 are sufficiently rigid as a whole and this depending the selection of material of the component 5. So, the thickness t is significantly higher than the thickness e. As example, t may be comprised between around 1,5.e and 4.e, more particularly between 2,4.e and 3.e. According to one embodiment, t is equal or in order of magnitude of 1.2 mm. That gives to the bottom 7 and to the cover 8 a good rigidity and strength. The thickness of the rim 20 and the thickness of the set back portion of rim 20a can be equal or almost equal to the thickness t of the wall 10 and consequently are sufficiently rigid as a whole, like the wall 10. However, the radial thickness of the internal edge 21, as well as the radial width of free transversal face 21a, may be less that t, e.g., in one embodiment, around 0.5.t (fig. 6). The radial width of the recesses 25, 30, 31 can be more or less around the half of the thickness t of the walls, 10, 16, 17.

As soon as the means to maintain 19 have been released, the spontaneous and natural maximum opening angle between the plan of the bottom 7 (plan of the rim 20) and the plan of the cover 8 (plan of the lower transversal cover opening 18) in opened configuration is comprised between around 115° and 145°, not necessarily more, in particular between around 125° and 135°, in particular around 130°, while there is not provided a supplementary specific opening movement end stop of the cover 8 at the opening angle. With a right parallelepiped case, the hinge can extend more between its two free first edges in the lateral transverse direction B, or it may be provided two or more elementary hinges 3.

We refer to fig. 11 to 13 which represents the insert 6 in its manufacturing conformation. The insert 6 is one single monobloc plastic component which is integrally molded in a material identical, or almost identical, or equivalent to the material used for the component 5 and is rigid as a whole. As a result, the insert 6 has the qualities already mentioned resulting from the use of the material of component 5. When the bottom + cover + hinge component 5 is molded by a bi-injection process (or so-called 2K injection molding), the material of the insert 6 may be, according to one embodiment, the first material PP1 of the bottom 7, or at least is a sufficiently opaque material that hides the technical means of the insert 6. The component 5 (bottom + cover + hinge) and the component 6 (insert) are molded separately, may be possibly in a more or less contemporary way.

The insert 6 comprises a transversal insert wall 32 having an exterior lower face 40 and a top interior face 39a. The insert 6 comprises above the transversal insert wall 32 and in continuity with it, a lateral peripheral insert wall arrangement 34 + 49. According to one embodiment, the lateral peripheral insert wall arrangement 34 + 49 comprises an internal lateral peripheral insert wall 34 and an external lateral peripheral insert wall 49. The internal peripheral wall 34 has an internal peripheral face 39b, an external peripheral face and the top first surrounding 24 disposed transverse. The internal edge 24a of the top first surrounding 24 defines the outline of a transversal insert opening 36. The external peripheral wall 49 has an internal peripheral face, an external peripheral face 33 and a top second surrounding 50 disposed transverse. The internal peripheral wall 34 and the external peripheral wall 49 are concentric around the main axis A, with an annular insert space 51 between them. According one embodiment, the internal peripheral wall 34, the external peripheral wall 49 and the annular insert space 51 have radial thicknesses (or dimension for the space 51) which are identical or close and chosen so that the insert 6 is sufficiently rigid as a whole. According to one embodiment, the thickness of the transversal insert wall 32, the internal peripheral wall 34 and the external peripheral wall 49 is equal or close to the thickness t of the walls 10, 16 and 17 of the bottom 7 and the cover 8. The internal peripheral wall 34 has an axial height higher than the axial height of the external peripheral wall 49, the top first surrounding 24 being higher than the top second surrounding 50. According one embodiment, the ratio between the axial height of the internal peripheral wall 34 and the axial height of the external peripheral wall 49 is around 1.2 to 1.3. According to one embodiment, the insert 6 comprises distinct and spaced radial wings 35, located inside the annular space 51, in one-piece continuity with the transversal insert wall 32, the internal peripheral wall 34 and the external peripheral wall. 49. The wings 35 contribute to a stiffening function of the insert 6. Such a radial wing 35 is limited on the top by a small free upper face connecting the top first surrounding 24 and the top second surrounding 50, and, consequently, this free face is inclined with respect to the main axis A, from the exterior side to the interior side, and from bottom to top.

The insert 6 comprises also a means 37 for fixing the bottom 7 (or by ellipse means for fixing 37) which is located on the external peripheral face 33 of the external peripheral wall 49. The means for fixing 37 and the means for fixing 15 are designed to be structurally complementary in order to be able to cooperate so as to ensure the mutual fixation of the insert 6 and the bottom 7, and so the component 5.

The insert 6 comprises also a content holding face 38 (or by ellipse holding face 38) which limits a hollow which is opened upward at the transversal insert opening 36. Such hollow limited by the holding face 38 and having the transversal insert opening 36 forms and defines the storage space 2. The function of the holding face 38 is to hold the content C: its mass is supported on the holding face 38 and immobilized in position within the hollow of the storage space 2. As described below, the content C is accommodated either directly on the holding face 38 or indirectly because the content is firstly accommodated within a godet 22 and the godet 22 with the content is secondly accommodated within the hollow defined by the holding face 38. The holding face 38 comprises a transversal portion and a lateral peripheral portion 39b. The transversal portion of the holding face 38 is the main central portion of the top interior face 39a which is limited by the internal peripheral face 39b (consequently not comprising the annular portion of the top interior face 39a which is external to the external peripheral face of the internal peripheral wall 34). The lateral peripheral portion 39b of the holding face 38 is formed and defined by the internal peripheral face of the internal peripheral wall 34. The arrangement comprising the internal peripheral wall 34 with its internal peripheral face 39b - the function of which is to limit the storage space 2 -, the external peripheral wall 49 with its external peripheral face 33 - the function of which is to cooperate with the internal face of the peripheral bottom wall 10 so that they are rigidly fixed together -, and the annular space 51, in combination makes it possible to provide two functional peripheral faces 39b and 33 which are properly spaced apart radially by the value of the sum of the thicknesses of the two internal 34 and external 49 peripheral walls and of the dimension radial of the annular space 51, by limiting the quantity of material used, thanks to the space 51, which is advantageous from an environmental point of view.

If desired, the storage space 2 may occupy all (or almost all) the hollow limited by the content holding face 38 so that the amount of content C relative to the volume of the case 1, LC can be maximized. We refer to fig. 1, 6, 7, 14 to 18 which depict the assembly of the component 5, i.e., its bottom 7, and the insert 6. Firstly, the internal peripheral face 10b of the wall 10 and the external peripheral face 33 of the external peripheral wall 49 have complementary adjusted surfaces that interlock. Secondly, the insert 6 is rigidly fixed transversely onto the bottom + cover + hinge component 5 with the respective means for fixing 15 and 37 located on their adjusted surfaces. The transversal insert wall 32 of the insert 6 extends and fits into the lower bottom opening 13. The means for fixing 15 and 37 are protrusions and grooves, or equivalent, located on the adjusted surfaces mentioned above. According to a first embodiment, the means for fixing 15 and 37 are irremovable so that the insert 6 is permanently fixed to the component 5. With this arrangement, the case 1 is not refillable and is discarded once the content C is consumed. According to a second embodiment, the means for fixing 15 and 37 are removable so that, once the content C is consumed, the insert 6 can be disconnected to the component 5 by means of an external action, for example with the help of the nail or a point or just pushing inside the compact to eject the insert 6, so that the case 1 can be refilled with a new mass of content C which, according to one embodiment is disposed in a godet 22. According to one other embodiment, the content is disposed in a new insert 6 which can replace the previous used insert which is discarded. Furthermore, the walls 10 and 49 are so dimensioned and the means for fixing 15 and 37 so located, that the lower edge 11 of the wall 10 and the exterior lower face 40 of the transversal insert wall 32 are coplanar. Or, it may be only just almost coplanar, the lower edge 11 of the wall 10 projecting slightly below the exterior lower face 40 so that, on one hand, the exterior lower face 40 is not a bearing face (of the case 1, LD) which could thus be damaged, on the other hand, a label can be attached on the exterior lower face 40 without being damaged by pressure or friction. With the insert 6 having the structure described above, that is having an internal peripheral wall 34 of axial height greater than the axial height of the external peripheral wall 49, the top first surrounding 24 being higher than the top second surrounding 50 and the wings 35 having upper faces free inclined, a space is provided upwards and at the periphery of the insert 6 for placing the set back portion of rim 20a and more particularly its protruding angle between its transversal portion 52a and its axial portion 52b.

We refer to the drawings of fig. 1, 6, 7, 11 to 13, 17 which show the insert 6 and the bottom 7 in the situation where they are assembled together, with the transversal insert wall 32 which extends and fits into the lower bottom opening 13. In this situation, the top first surrounding 24 of the insert 6, which is the upper part of the insert 6, is placed within a space closed from above provided by the bottom top rim 20 and is facing the rim transversal lower face 23b. The top second surrounding 50 of the insert 6 is facing the annular transversal lower face 53a of the transversal portion 52a of the set back portion of rim 20a. The small free upper faces of the wings 35 are located facing the protruding angle formed by the transversal portion 52a and the axial portion 52b of the set back portion 20a. The set back portion of rim 20a is thus placed in the space left by the insert 6, upwards and at its periphery, due to the axial height difference between the internal peripheral wall 34 and external peripheral wall 49. According to one embodiment, the top first surrounding 24 is located close the rim transversal lower face 23b and spaced to it, without contact. And the top second surrounding 50 is spaced to the annular transversal lower face 53a, without contact. So, there is no contact between the set back portion 20a and the insert 6.

According to a first embodiment (fig. 1, 11 to 13), the transversal insert wall 32 of the insert 6 is full, that means without opening. The storage space 2 is closed on the exterior lower face 40 of the transversal insert wall 32. The content C (possibly within the godet 22) is placed in the storage space 2 from above, through the transversal insert opening 36. According to a second embodiment (fig. 14, 15), the transversal insert wall 32 comprises one small functional hole 42. The storage space 2 is opened (by means of the small hole 42) on the exterior lower face 40 of the transversal insert wall 32. The content C is placed in the storage space 2 from below, through the small hole 42 at the condition to be in fluid state for its injection (and dried later), the loaded case LD having no godet 22. The hole 42 may be used when the loaded case LD has a godet 22 in order to disconnect an empty godet 22 from the insert 6 by introduction within the hole 42 of a small stem capable to push the godet 22. That arrangement is combined with that in which the means for fixing 15 and 37 are removable so that the case 1 is refillable.

We refer to the accommodation of the content C in the storage space 2. According to a first embodiment (fig. 16, 18), the mass of the content C is accommodated directly on the holding face 38, i.e., without any godet. According to a second embodiment (fig.1, 5, 6, 7), the mass of the content C is accommodated firstly within a separate godet 22 and thereafter the godet 22 with the content C is accommodated on the content holding face 38. The godet 22 has a transversal godet wall, a lateral peripheral godet wall located above the transversal godet wall, which is terminated by a top godet edge 22a, and an access top godet opening limited by the top godet edge 22a. The peripheral godet wall and the transversal godet wall define and limit a hollow capable to receive the content C. The godet 22 is a separate part of the insert 6. It has an outer shape which is complementary to the holding face 38. The godet 22 is located in contact with the transversal portion of the holding face 38 and, if not in loose contact, close to the lateral peripheral portion 39b of the holding face 38, with a radial transverse play allowing it to be put in place. The free transversal face 21a of the rim 20 can be an axial stop upwards of the top godet edge 22a and a fixing and immobilizing mechanical means of the godet 22 to the bottom 7 (and so to the component 5) avoiding any unwanted movement of the godet 22 when it is placed within the bottom 7. That is because, with appropriate axial positions and dimensions of the bottom 7 and the insert 6 (and their constitutive parts), the rim 20 of the bottom 7 can exert a vertical downwardly force on the godet 22, via the respective faces 21a and 22a in contact, with the effect to establish a hold-in-position contact between the transversal godet wall and the transversal insert wall 32 which is itself in hold-in-position contact with the bottom 7. With this arrangement, the godet 22 is maintained in position mechanically by clamping between the rim 20 of the bottom 7 and the insert 6. This holding-in-position of the godet 22 may be effective without requiring any other means of attachment for example glue. That is advantageous for environmental purpose. The godet 22 can be made of aluminum or equivalent material, of low thickness. For environmental purpose, the godet 22 and the insert 6 can be disassembled and each appropriately recycled. According to possible different embodiments, the godet 22 is the combination of several elementary godets arranged side by side and containing different contents, in particular four elementary godets. Such elementary godets, when arranged together properly, may have a global shape and dimensions equivalent to the global shape and dimensions of a godet when the case LD has a single godet, or/and such elementary godets have identical or similar dimensions or, on the contrary different dimensions because at least one is larger than the other or one is smaller than the other.

According to one embodiment (fig. 1, 5, 6, 7, 12, 13, 16 to 18) it is provided on the internal face of the transversal portion of the holding face 38, a series of grooves 43 (and so, protrusions). They may be annular. The grooves 43 facilitate the attachment of the content C when it is accommodated directly on the holding face 38, because the material of the content fills the grooves 43 to which the material of the content C is attached. The grooves 43 can be used, if desired, to secure or help to secure, with the means of glue, a godet 22 when the content C is accommodated indirectly on the holding face 38, by means of a godet 22. Either the product of the content C can fill the grooves 43, or the grooves 43 can capture a glue capable to secure or help to secure the godet 22 on the insert 6. However, according to one other embodiment, described above, the godet 22 is not glued for fixing, but fixed mechanically by clamping between the rim 20 of the bottom 7 and the insert 6. According to another embodiment (fig. 14), it is provided protrusions (and so, grooves 52) on the exterior lower face 40 of the transversal insert wall 32, adapted to fix a label on the case 1, LD. Such grooves 52 may be annular and make it possible to limit the amount of material constituting the insert 6 without affecting its strength.

According to the embodiment of fig. 6, 8, 10, 13, it is provided at least one radial (or more or less radial) protrusion 44a (on fig. 10, two almost radial protrusions 44a, spaced apart from each other in proximity to each other) on the internal peripheral face 10b of the wall 10 which can cooperate with at least one notch 44b provided into the transversal insert wall 32 and the external peripheral insert wall 49, in order to orientate the insert 6, and so the content C, relatively to the bottom 7, around the main axis A. This orientation is useful when the free upper surface 4 of the content C is provided with a logo, patterns, or signs (for information or commercial or decorative purposes) obtained directly on the product of the content C (for example by pressing). Such logo, patterns, or signs are also a content tamper evident indicator.

As depicted on fig. 16 to 18, the free upper surface 4 of the content C (not yet consumed) may be located in the plane of the transversal insert opening 36 or in the close neighboring of such plane. With the embodiment in which the content C is accommodated directly on the holding face 38, the free upper surface 4 of the content C may be located in the plane of the top first surrounding 24 or a little below this plane, by depending on the degree of filling desired. According to one embodiment, the falling portion of the internal edge 21 with its free face 21a is prevented from penetrating into the content C. With the embodiment in which the content C is accommodated indirectly on the holding face 38, by means of a godet 22, the free upper surface 4 of the content C may be located in the plane of the top godet edge 22a or a little below this plane, by depending on the degree of filling desired. In the direction of the main axis A, the content C can thus have a thickness of up to about 40% the total height of the bottom 7, considering the thickness of the rim 20 and the transversal insert wall 32. In radial direction, the content C can have a diameter d of up to about 75%, more particularly up to around 85%, of the external diameter D of the rim 20. The amount of content C is thus maximized. According to one possibility, the radial dimension of the rim 20 is sufficient to allow the insert peripheral wall 34 to be placed in plum line.

The existence of the material parts of the components 5 and 6, and of the godet 22 if it is provided (and therefore the existence of the parts without material), the size, the shape and the relative arrangement of these parts make it possible to achieve a case having the desired characteristics, and in particular its compactness, its simplicity, its ecological dimension, and its opening as described.

The manufacturing process of a case 1 as described above needs to a starting point where one have available a bottom + cover + hinge component 5 in its manufacturing conformation (closed configuration) as represented on fig. 19, and an insert 6, as represented on fig. 11, disassembled (fig. 23). Thereafter one fill the storage space 2 of the insert 6 with the content C (symbolized by the arrow F of fig. 23) (without or with a godet according to the embodiments, as described below). Thereafter, and finally, one introduce the insert 6 with the content C (without or with a godet according to the embodiments, as described below) within the lower bottom opening 13 till it is located within the hollow 9 of the bottom 7 and till the means for fixing 15 and 37 cooperate (symbolized by the arrow I of fig. 24). The loaded case LD so manufactured is as it is depicted on fig. 18. In the embodiment where there is a godet 22, the godet 22 may be fixed mechanically by clamping between the rim 20 of the bottom 7 and the insert 6 without glue. Or possibly, according to another embodiment, it may be used glue.

Several different possibilities are offered to fill the content C within the storage space 2 of the insert 6. One embodiment is hot pour directly the content C into the storage space 2, from above, via the transversal insert opening 36. One other embodiment is compressing the content C into powder state into the storage space 2, from above, via the transversal insert opening 36. One other embodiment is injecting the content C at a fluid state into the storage space 2 from below, through the hole 42 of the transversal insert wall 32. One other embodiment is compressing the content C into powder state into a godet 22 from above the godet 22 and thereafter placing the godet 22 with the content C into the storage space 2, from below, via the lower bottom opening 13.

The manufacturing process to have available a bottom + cover + hinge component 5 in its manufacturing conformation (closed configuration) is the following. As represented symbolically on fig. 20, one has available a molding apparatus with at least two parts 45, i.e., a fix part on the injection side and a movable part on the ejection side of a molding apparatus, and injection means, and with at least one mold cavity 46 having an inner shape complementary to the shape of the bottom + cover + hinge component 5 in its flat fully opened configuration represented on fig. 8. One has available molding plastic material selected as described above. Following (fig. 21), one mold the molding material in the mold cavity 46 to obtain a bottom + cover + hinge component 5 in its intermediate manufacturing conformation in which it is fully opened flat at 180° (fig. 8). Following (fig. 22), one pivot at 180° the bottom 7 and the cover 8, relatively to each other, by means of the hinge 3 with reference to the pivot axis space, from such intermediate manufacturing conformation (symbolized by the arrow CA fig. 22). At the end of the pivotal movement, the bottom + cover + hinge component 5 is in its manufacturing conformation (closed configuration), ready to receive the insert 6 and the content C in its storage space 2, as described above.

As regards the molding step, it may be a bi-injection process (or so-called 2K injection molding) with a first material PP1 for the bottom 7 and a second material PP2 for the cover 8 and the hinge 3. As represented on fig. 21, one used a molding apparatus with two injection holes 47a and 47b on the same side of one part of the mold. One injection hole 47a is located towards the bottom 7, opposite the hinge 3, and the other 47b towards the internal central part of the transversa wall of the cover 8. A movable bridge or dam 48 can separate the two sub-cavities where the first material PP1 and the second material PP2 must be injected.

As regards the step of the 180° pivotal movement, it is made, it takes place at a time when the bottom + cover + hinge component 5, being in its intermediate manufacturing conformation, is still hot, at a precise temperature, kept stable by timing and manufacturing conditions. Such 180° pivotal movement is made immediately after molding or after a very short delay after molding (a few seconds or maximum one or two minutes). This step is made either when the bottom + cover + hinge component 5 in its intermediate manufacturing conformation is still in the mold cavity 46 or after it has been removed or ejected from the mold cavity 46 and deposited on a handling tool.

According to one embodiment, it is possible to have in-mold decoration on the case 1, more specially the cover 8, with the installation of a decorated film in the mold in front of the injection hole. More generally, the in-mold decoration is applied for the bottom 7 and/or the cover 8 and/or the insert 6.

## Claims

1. Component (5) for case, intended to be a part of a case (1) of a content (C) of a product forming a solid mass, such as a cosmetic product suitable for removal by means of a pick-up utensil or manually, such component (5) being in its manufacturing conformation with closed configuration, having an axis (A), and comprising :
a. a bottom (7) with a hollow (9), which includes a lateral peripheral bottom wall (10) having a lower edge (11), an upper transversal bottom opening (12), and a lower transversal bottom opening (13) limited by a bottom opening edge;
b. a cover (8) which includes a transversal cover wall (16) and a lateral peripheral cover wall (17);
c. a side opening / closing hinge (3), associated between the bottom (7) and the cover (8);
d. a means (19) to maintain in the closed configuration, which is reversible and associated with the bottom (7) and with the cover (8);
**characterized in that**:
e. the bottom (7) comprises a means (15) for fixing an insert (6);
f. the bottom (7), the cover (8) and the hinge (3) are one single monobloc plastic component bottom + cover + hinge (5);
g. the bottom + cover + hinge component (5) is molded in an intermediate manufacturing conformation in which it is fully opened flat at 180°;
h. the hinge (3) is chosen to be a film hinge;
i. the material of the bottom + cover + hinge component (5) is selected as being a plastic material which can be injection molded, and such that, with a thickness such as the thickness of the walls of the bottom (7) or the cover (8), it forms something sufficiently rigid, and with a thickness such as the thickness of the hinge (3), it forms something sufficiently deformable;
j. the walls (10, 16, 17) of the bottom (7) and the cover (8) have thicknesses chosen so that the bottom (7) and the cover (8) are sufficiently rigid as a whole, in particular the thicknesses of the wall (10), the wall (16) and the wall (17) are equal or almost equal while the hinge (3) has a thickness chosen to be deformable and capable of easily pivoting with reference to a pivot axis space.

2. Bottom + cover + hinge component (5) according to claim 1, in which the material of component (5) is a thermoplastic polymer having chains of molecules which can be oriented as desired, in particular polyolefin or a polyolefin composition.

3. Bottom + cover + hinge component (5) according to any of claim 1 and 2, in which the material of component (5) is polypropylene or a polypropylene composition.

4. Bottom + cover + hinge component (5) according to any claim 1 to 3, molded by a bi-injection process or 2K injection molding, with a first material (PP1) for the bottom (7) and a second material (PP2) for the cover (8), in particular one material opaquer and one material more transparent or translucent, in particular one material substantially opaque in order not to allow to see substantially through it, and one material substantially transparent or translucent in order to allow to see through it.

5. Bottom + cover + hinge component (5) according to claim 4, in which the first material (PP1) is the opaquer material, and the second material (PP2) is the more transparent or translucent material.

6. Bottom + cover + hinge component (5) according to any of claims 1 to 5, in which the bottom (7) includes a bottom top rim (20), arranged transversely and directed towards the axis (A), extending from the upper portion (10a) of the peripheral bottom wall (10) with an intermediate set back portion of rim (20a), the bottom top rim (20) having an annular rim transversal upper face (23a) suitable to form an entourage, an annular rim lower face (23b), and an internal edge (21) which defines the peripheral edge of the top bottom opening (12), the bottom top rim (20) providing a space closed from above, the set back portion of rim (20a) comprising a transversal portion (52a) adjoining the upper portion (10a) and an axial portion (52b) adjoining the external edge of the rim (20), the hollow angled formed by the transversal portion (52a) and the axial portion (52b) producing a first recess (25), the lower terminal portion (17a) of the peripheral cover wall (17) and the first recess (25) having complementary shapes adapted to cooperate in closed configuration of the component (5).

7. Bottom + cover + hinge component (5) according to claim 6, in which the internal edge (21) of the bottom top rim (20) includes a falling portion with a free transversal face (21a).

8. Bottom + cover + hinge component (5) according to any of claims 6 and 7, in which the film hinge (3) is connected to the peripheral bottom wall (10) at its upper portion (10a) within an upper second recess (30) directed towards the exterior and upwards formed in the lateral peripheral exterior face of the transversal portion (52a), the film hinge (3) is connected to the peripheral cover wall (17) within a lower third recess (31) directed toward the exterior and downwards, in such a way that the hinge (3) registers substantially in the envelope formed by the external faces of the peripheral bottom wall (10) and the peripheral cover wall (17).

9. Bottom + cover + hinge component (5) according to any of claims 1 to 8, in which the hinge (3) is deformable as a whole so that its deformation providing the pivoting movement occurs over an extent in a pivot axis space which is extended in a lateral transverse direction (B), the hinge (3) extends between two free first edges spaced from each other along the lateral transverse direction (B) and extends between two second edges connected respectively to the bottom (7) and the cover (8) in a transverse radial axis (E) along which the hinge (3) has a width (W), the connections between the hinge (3) and the bottom (7) and the cover (8) being in one piece continuously, and in which the pivotal movement of the hinge (3) is a greater or lesser variation in the curvature in the extent of the hinge (3) between the two second edges.

10. Bottom + cover + hinge component (5) according to claims 1 to 9, in which:
a. the thickness (e) of the hinge (3) is comprised between 0,3 mm and 0,8 mm, more particularly between about 0,4 mm and about 0,5 mm; and/or
b. the width (W) of the hinge (3) in a transverse radial axis (E) is around 3 mm; and/or
c. the thicknesses of the peripheral bottom wall (10), the transversal cover wall (16) and the peripheral cover wall (17) is significantly higher than the thickness (e), being comprised between around 1,5.e and 4.e, more particularly between 2,4.e and 3.e. and/or
d. the thicknesses of the peripheral bottom wall (10), the transversal cover wall (16) and the peripheral cover wall (17) are equal or almost equal to a value t;
e. the thicknesses of the peripheral bottom wall (10) the transversal cover wall (16) and the peripheral cover wall (17) are equal or in order of magnitude of 1,2 mm.

11. Case (1) intended to a content (C) of a product forming a solid mass, such as a cosmetic product suitable for removal by means of a pick-up utensil or manually, in disassembled situation and in empty state, comprising :
a. a bottom + cover + hinge component (5) according to any of claims 1 to 10, the hollow (9) of which defining a lateral envelope in which is located a storage space (2) suitable for the content (C);
b. a separate lower closure insert component (6), having an axis (A), being in one single monobloc plastic component which is integrally molded in a material identical, or almost identical, or equivalent to the material used for the component (5), and is rigid as a whole, which comprises :
i. a transversal insert wall (32) having an exterior lower face (40) and a top interior face (39a);
ii. a lateral peripheral insert wall arrangement (34, 49) in continuity with transversal insert wall (32), providing a functional internal peripheral face (39b) which limits the storage space (2) and a functional external peripheral face (33) which is suitable and destinated to cooperate with the internal face of the peripheral bottom wall (10);
iii. walls (32, 34, 49) having thicknesses chosen so that the insert (6) is sufficiently rigid as a whole;
iv. a top first surrounding (24) having an internal edge (24a) defining the outline of a transversal insert opening (36);
v. a means (37) for fixing a bottom (7);
vi. a content holding face (38) having the function to hold the content (C), which limits a hollow opened upward by a transversal insert opening (36), which forms and defines the storage space (2), comprising a transversal portion being the main central portion of the top interior face (39a) and a lateral peripheral portion (39b) which is the functional face (39a) of the lateral peripheral insert wall arrangement (34, 49);
and in which :
c. the internal face (10b) of the peripheral bottom wall (10) and the external face (33) of the lateral peripheral insert wall arrangement (34, 49) have complementary adjusted surfaces that are capable to interlock;
d. the insert (6) is capable to be rigidly fixed transversely onto the bottom + cover + hinge component (5) with the respective means for fixing (15, 37) located on their adjusted surfaces, so that the insert (6) is capable to extend and fit into the lower transversal bottom opening (13).

12. Case (1) according to claim 11, in which the lateral peripheral insert wall arrangement (34, 49) comprises :
a. an internal lateral peripheral insert wall (34) having the internal peripheral face (39b) and the top first surrounding (24) disposed transverse, and an external peripheral wall (49) having an external peripheral face (33) and a top second surrounding (50) disposed transverse, the walls (34) and (49) being concentric around the axis (A);
b. an annular insert space (51) between the walls (34) and (49).

13. Case (1) according to claim 12, which comprises distinct and spaced radial wings (35) located inside the annular space (51), in one-piece continuity with the transversal insert wall (32), the internal peripheral wall (34) and the external peripheral wall (49), each wing (35) being limited on the top by a free upper face connecting the top first surrounding (24) and the top second surrounding (50).

14. Case (1) according to any of claims 11 and 12, in which the internal peripheral wall (34), the external peripheral wall (49) and the annular insert space (51) have radial thicknesses which are identical or close and chosen so that the insert (6) is sufficiently rigid as a whole, in particular a thickness which is equal or close to the thicknesses of the walls (10, 16, 17) of the bottom (7) and the cover (8).

15. Case (1) according to any of claims 12 to 14, in which the internal peripheral wall (34) has an axial height higher than the axial height of the external peripheral wall (49), the top first surrounding (24) being higher than the top second surrounding (50).

16. Case (1) according to any of claims 12 to 15, in which it is provided grooves (43) and protrusions on the internal face of the transversal portion of the holding face (38).

17. Case (1) according to any of claims 12 to 16, in which it is provided grooves (52) and protrusions on the exterior lower face (40) of the transversal insert wall (32).

18. Case (1) intended to a content (C) of a product forming a solid mass, such as a cosmetic product suitable for removal by means of a pick-up utensil or manually, in assembled situation and in empty state, in its closed configuration, having a main axis (A), which comprises :
a. a bottom + cover + hinge component (5) according to any of claims 1 to 10, the hollow (9) of which defining a lateral envelope in which is located a storage space (2) suitable for the content (C);
b. a separate lower closure insert component (6), having an axis (A), being in one single monobloc plastic component which is integrally molded in a material identical, or almost identical, or equivalent to the material used for the component (5), and is rigid as a whole, which comprises:
i. a transversal insert wall (32) having an exterior lower face (40) and a top interior face (39a);
ii. a lateral peripheral insert wall arrangement (34, 49) in continuity with transversal insert wall (32), providing a functional internal peripheral face (39b) which limits the storage space (2) and a functional external peripheral face (33) which is suitable and destinated to cooperate with the internal face of the peripheral bottom wall (10);
iii. walls (32, 34, 49) having thicknesses chosen so that the insert (6) is sufficiently rigid as a whole;
iv. a top first surrounding (24) having an internal edge (24a) defining the outline of a transversal insert opening (36);
v. a means (37) for fixing a bottom (7);
vi. a content holding face (38) having the function to hold the content (C), which limits a hollow opened upward by a transversal insert opening (36), which forms and defines the storage space (2), comprising a transversal portion being the main central portion of the top interior face (39a) and a lateral peripheral portion (39b) which is the functional face (39a) of the lateral peripheral insert wall arrangement (34, 49);
and in which:
c. the internal face (10b) of the peripheral bottom wall (10) and the external face (33) of the peripheral insert wall (34) have complementary adjusted surfaces that interlock;
d. the insert (6) is rigidly fixed transversely onto the bottom + cover + hinge component (5) with the respective means for fixing (15, 37) located on their adjusted surfaces, so that the insert (6) extends and fits into the lower transversal bottom opening (13);
e. it includes a lower transverse case (1) support plane.

19. Case (1) according to claim 18, **characterized in that** it consists of two components, i.e., the bottom + cover + hinge component (5) and the closure insert component (6).

20. Case in loaded state (LD), loaded with a content (C) of a product forming a solid mass, such as a cosmetic product suitable for removal by means of a pick-up utensil or manually, in its closed configuration, having a main axis (A), which comprises:
a. a case (1) in assembled situation according to any of claims 18, 19, except not being in empty state of content;
b. a content (C), disposed in the storage space (2) of the insert (6), supported and contained by the content holding face (38) and surrounded by the annular upper face (23a) of the bottom top rim (20);
and in which:
c. either the mass of the content (C) is accommodated directly on the content holding face (38), or
d. the mass of the content (C) is accommodated within a separate godet (22) and the godet (22) with the content (C) is accommodated on the content holding face (38), the godet (22) having a transversal godet wall, a lateral peripheral godet wall terminated by a top godet edge (22a) and an access top godet opening limited by the top godet edge (22a).

21. Case (LD) according to claim 20, in which the godet (22) is fixed mechanically by clamping between the bottom top rim (20) of the bottom (7) and the insert (6).

22. Case (LD) according to claim 21, in which the top godet edge (22a) is in clamping contact with the free transversal face (21a) of the axial falling portion of the internal edge (21) of the bottom top rim (20) or in clamping contact with the rim transversal lower face (23b) of the bottom top rim (20).

23. Case (LD) according to any of claims 21 and 22, in which the godet (22) is in clamping contact with the top interior face (39a) of the transversal insert wall (32) of the insert (6).

24. Case (LD) according to any of claims 20 to 23, in which the godet (22) is not glued for fixing.

25. Case (LD) according to any of claims 20 to 24, in which the godet (22) is the combination of several elementary godets arranged side by side and containing different contents, in particular four elementary godets.

26. Case (LD) according to any of claims 20 to 25, in which it is provided at least one radial protrusion (44a) on the internal face (10b) of the peripheral bottom wall (10) which can cooperate with at least one notch (44b) provided into the transversal insert wall (32) and the external peripheral insert wall (49), in order to orientate the insert (6), and so the content (C), relatively to the bottom (7), around the axis (A).

27. Case (LD) according to any of claims 20 to 26, in which the top first surrounding (24) of the insert (6) is placed within a space closed from above provided by the bottom top rim (20) and is facing the rim transversal lower face (23b), the top second surrounding (50) of the insert (6) is facing the annular transversal lower face (53a) of the transversal portion (52a) of the set back portion of rim (20a), and the small free upper faces of the wings (35) are located facing the protruding angle formed by the transversal portion (52a) and the axial portion (52b) of the set back portion (20a).

28. Case (LD) according to claim 27, in which the top first surrounding (24) of the insert (6) is located close the rim transversal lower face (23b) and spaced to it, without contact, and the top second surrounding (50) of the insert (6) is spaced to the annular transversal lower face (53a), without contact.

29. Case (LD) according to any of claims 20 to 28, in which the transversal insert wall (32) is either full without opening or comprises one small functional hole (42) to inject the content (C) within the storage space (2) or to allow the passage of an ejector tip to eject a godet (22) from the storage space (2).

30. Case (LD) according to any of claims 20 to 29, in which the means (15) for fixing the insert (6) to the bottom (7) and the means (37) for fixing the bottom (7) to the insert (6) are protrusions and grooves or equivalent which cooperate and are located on the adjusted surfaces of the internal peripheral face (10b) of the peripheral bottom wall (10) and the external peripheral face (33) of the external peripheral wall (49).

31. Case (LD) according to any of claims 20 to 30, in which the means (15) for fixing the insert (6) to the bottom (7) and the means (37) for fixing the bottom (7) to the insert (6) are either irremovable, the insert (6) being permanently fixed to the bottom (7), or removable the case (1) being so refillable.

32. Case (LD) according to any of claims 20 to 31, in which:
a. the lower edge (11) of the peripheral bottom wall (10) and the exterior lower face (40) of the transversal insert wall (32) are either coplanar or almost coplanar, the lower edge (11) projecting slightly below the exterior lower face (40), and/or
b. the lower transversal bottom opening (13) is limited by the lower edge (11) of the peripheral bottom wall (10), and/or
c. the lower edge (11) of the peripheral bottom wall (10) defines a lower support plan of the case (1, LD).

33. Case (LD) according to any of claims 20 to 32, in which as soon as the means (19) to maintain in the closed configuration have been released, the spontaneous and natural opening angle between the bottom (7) and the cover (8) in opened configuration is comprised between around 115° and 145°, in particular between around 125° and 135°, in particular around 130°.

34. Case (LD) according to claim 33, without any supplementary specific opening movement end stop of the cover (8) at the opening angle.

35. Case (LD) according to any of claims 20 to 34, in which the free upper surface (4) of the mass of the not yet consumed content (C) is located in the plane of the transversal insert opening (36) or in the close neighboring of such plane.

36. Case (LD) according to claim 35, in which, with the content (C) accommodated directly on the holding face (38) of the insert (6), the free upper surface (4) of the content (C) is located in the plane of the top first surrounding (24) or a little below this plane.

37. Case (LD) according to claim 35, in which, with the content (C) accommodated indirectly on the holding face (38) of the insert (6), by means of a godet (22), the free upper surface (4) of the content (C) is located in the plane of the top godet edge (22a) or a little below this plane.

38. Case (LD) according to any of claims 20 to 37, in which in the direction of the axis (A), the content (C) has a thickness of up to about 40% of the total height of the bottom (7), and in radial direction, the content (C) has a diameter d of up to about 75%, more particularly up to around 85%, of the external diameter D of the rim (20).

39. Process to manufacture a bottom + cover + hinge component (5) according to any of claims 1 to 10, the component (5) being in its manufacturing conformation with closed configuration, in which:
a. having available a molding apparatus with at least one mold cavity (46) having an inner shape complementary to the shape of the bottom + cover + hinge component (5) in an intermediate manufacturing conformation in which it is fully opened flat at 180°;
b. having available molding material;
c. molding the molding material in the mold cavity (46) to obtain a bottom + cover + hinge component (5) having an intermediate manufacturing conformation in which it is fully opened flat at 180°;
d. pivoting relatively the bottom (7) and the cover (8) from its intermediate manufacturing conformation, relatively to each other, by means, and at the location, of the hinge (3) till the cover (8) cooperates with, and closes, the bottom (7);
the so manufactured bottom + cover + hinge component (5) being then in its manufacturing conformation with closed configuration.

40. Process to manufacture a bottom + cover + hinge component (5) according to claim 39, in which pivoting step d. is made at a time when the bottom + cover + hinge component (5) in its intermediate manufacturing conformation is still hot as a result of its molding, in particular without noticeable delay after molding.

41. Process to manufacture a bottom + cover + hinge component (5) according to any of claims 39 and 40, in which pivoting step d. is made either when the bottom + cover + hinge component (5) in its intermediate manufacturing conformation is still in the mold cavity (46) or after the bottom + cover + hinge component (5) in its intermediate manufacturing conformation has been removed from the mold cavity (46).

42. Process to manufacture a bottom + cover + hinge component (5) according to any of claims 39 to 41, in which the molding step c. is a bi-injection or 2K molding with a first material (PP1) for the bottom (7) and a second material (PP2) for the cover (8).

43. Process to manufacture a case (1) according to any of claims 20 to 30, in which:
a. having available a manufactured bottom + cover + hinge component (5) according to any of claims 39 to 42 in its manufacturing conformation with closed configuration, and having a closure insert (6), being not assembled;
b. filling the storage space (2) of the insert (6) with the content (C);
c. introducing the insert (6) containing the content (C) within the lower bottom opening (13) till it is located within the hollow (9) of the bottom (7) and till the means (15) for fixing the insert (6) of the bottom (7) and the means (37) for fixing the bottom (7) of the insert (6) cooperate.

44. Process to manufacture a case (1) according to claim 43, in which the step b. of filling the storage space (2) of the insert (6) with the content (C) is chosen among the following:
a. hot pour directly the content (C) into the storage space (2) of the insert (6), via its insert opening (36);
b. compress the content (C) into powder state into the storage space (2) of the insert (6), via its insert opening (36);
c. inject the content (C) at a fluid state into the storage space (2) of the insert (6) through the small injection hole (42) of the transversal insert wall (32);
d. compress the content (C) into powder state into a godet (22) and further placed the godet (22) containing the content (C) into the storage space (2) of the insert (6), via the lower bottom opening (13).

45. Process to manufacture a case (1) according to claim 43, in which the step c. of introducing the insert (6) containing the content (C) within the lower bottom opening (13) and fixing the insert (6) to the bottom (7) comprises fixing and immobilizing the godet (22), maintained in position mechanically by clamping between the rim (20) of the bottom (7) and the transversal insert wall (32) of the insert (6).

46. Process to manufacture a case (1) according to claim 45, in which the godet (22), maintained in position without glue.

47. Process to manufacture a case (1) according to any of claims 43 to 46, in which it further includes an in-mold decoration on the cover (8) and/or the bottom (7) and/or the insert (6).
